(19) Europäisches Patentamt
European Patent Office
Office européen des brevets

(11) **EP 4 386 461 B1**

(12) **EUROPEAN PATENT SPECIFICATION**

(45) Date of publication and mention
of the grant of the patent:
**05.08.2026 Bulletin 2026/32**

(51) International Patent Classification (IPC):
***G02B 13/00*** (2006.01)    ***G02B 9/62*** (2006.01)

(21) Application number: **21953132.4**

(52) Cooperative Patent Classification (CPC):
**G02B 9/62; G02B 13/0045; G02B 13/006; G03B 30/00**

(22) Date of filing: **12.08.2021**

(86) International application number:
**PCT/CN2021/112182**

(87) International publication number:
**WO 2023/015511 (16.02.2023 Gazette 2023/07)**

(54) **OPTICAL SYSTEM, IMAGING MODULE, ELECTRONIC DEVICE AND VEHICLE**

OPTISCHES SYSTEM, KAMERAMODUL, ELEKTRONISCHE VORRICHTUNG UND TRÄGER

SYSTÈME OPTIQUE, MODULE D'IMAGERIE, DISPOSITIVE ÉLECTRONIQUE ET VEHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.06.2024 Bulletin 2024/25**

(73) Proprietor: **Jiangxi OFILM Optical Co., Ltd.
Nanchang, Jiangxi 330096 (CN)**

(72) Inventors:
• **TSAI, Hsiung-Yu
  Shenzhen, Guangdong 518106 (CN)**
• **LE, Yuming
  Shenzhen, Guangdong 518106 (CN)**
• **ZHAO, Di
  Shenzhen, Guangdong 518106 (CN)**

(74) Representative: **Zaboliene, Reda
Metida
Business center Vertas
Gyneju str. 16
01109 Vilnius (LT)**

(56) References cited:
CN-A- 108 919 459    CN-A- 112 731 630
CN-A- 113 031 211    CN-A- 113 138 458
CN-U- 211 293 433    US-A1- 2016 377 839
US-A1- 2020 150 386    US-A1- 2021 199 933

• "Handbook of optical systems, Aberration theory and correction of optical systems, Chapter 31: Correction of Aberrations ED  - Gross H", 1 January 2007, HANDBOOK OF OPTICAL SYSTEMS, ABERRATION THEORY AND CORRECTION OF OPTICAL SYSTEMS, WILEY-VCH, WEINHEIM, DE, PAGE(S) 215 - 221, 225, ISBN: 978-3-527-40379-0, XP002719371
• "Handbook of Optical Systems, Vol 3", 1 January 2007, WILEY-VCH, Weinheim, ISBN: 978-3-52-740379-0, article HERBERT GROSS: "Handbook of Optical Systems, Vol.3 : Aberration Theory and Correction of optical Systems", pages: 377 - 379, XP055169688
• "Modern Lens Design", 1 January 1992, MCGRAW-HILL, INC, ISBN: 978-0-07-059178-3, article WARREN J. SMITH: "Modern Lens Design", pages: 25 - 27, XP055152035

EP 4 386 461 B1

**Description**

FIELD

The present invention relates to field of imaging, and in particular to an optical system, an image module, an electronic device, and a vehicle.

BACKGROUND

With the continuous development of automotive safety technologies such as assisted driving technology, autonomous driving and driverless driving, the application of in-vehicle lenses is becoming more and more popular. The installation positions of the in-vehicle lenses are different, and their functions are also different. Among them, the front-view camera needs to observe images from a longer distance, and provides people with reference for blind spot areas outside the area observable by the human eye, so that the driver can know the road conditions ahead in real time during driving to provide guarantee for safe driving. Therefore, the front-view camera needs to have a larger focal length. However, the current front-view camera has a long focal length, which easily leads to a decrease in imaging quality, making it difficult to achieve both telephoto characteristics and high imaging quality. Conventional systems are known in US 2021/199933 A1 and US 2020/150386 A1.

SUMMARY

The invention is defined by the appended claims.
According to various embodiments of the present application, an optical system, an image module, an electronic device, and a vehicle are provided.
An optical system, from an object side to an imaging side along an optical axis, includes:

a first lens having negative refractive power, an object side surface of the first lens being concave near the optical axis;
a second lens having positive refractive power, an object side surface of the second lens being convex near the optical axis;
a third lens having positive refractive power, an object side surface of the third lens being convex near the optical axis, an imaging side surface of the third lens being convex near the optical axis;
a fourth lens having positive refractive power;
a fifth lens having negative refractive power, an object side surface of the fifth lens being concave near the optical axis, an imaging side surface of the fifth lens being concave near the optical axis;
a sixth lens having positive refractive power;
a seventh lens having negative refractive power, an object side surface of the seventh lens being concave near the optical axis, an imaging side surface of the seventh lens being concave near the optical axis;
and the optical system satisfying the following conditional expression:

$$-5 \leq f7/f \leq -2.5;$$

wherein, f7 is an effective focal length of the seventh lens, f is an effective focal length of the optical system.

An image module includes a photosensitive element and the above-mentioned optical system, the photosensitive element is arranged on the imaging side of the optical system.
An electronic device includes a housing and the above-mentioned image module, the image module is provided in the housing.
A vehicle includes a mounting part and the above-mentioned electronic device, the electronic device is provided on the mounting part.
The details of one or more embodiments of the invention are set forth in the accompanying drawings and the description below. Other features, objects and advantages of the invention will become apparent from the description, drawings and claims.

BRIEF DESCRIPTION OF THE DRAWINGS

To better describe and illustrate embodiments and/or examples of those inventions disclosed herein, reference may be made to one or more of the accompanying drawings. The additional details or examples used to describe the drawings should not be construed as limiting the scope of any of the disclosed inventions, the embodiments and/or examples presently described, and the best modes currently understood of these inventions.

FIG. 1 is a schematic structure diagram of an optical system of a first embodiment of the present application;
FIG. 2 is a longitudinal spherical aberration diagram, astigmatism diagram and distortion diagram of the optical system of the first embodiment of the present application;
FIG. 3 is a schematic structure diagram of an optical system of a second embodiment of the present application;
FIG. 4 is a longitudinal spherical aberration diagram, astigmatism diagram and distortion diagram of the optical system of the second embodiment of the present application;
FIG. 5 is a schematic structure diagram of an optical system of a third embodiment of the present application;
FIG. 6 is a longitudinal spherical aberration diagram, astigmatism diagram and distortion diagram of the optical system of the third embodiment of the present application;
FIG. 7 is a schematic structure diagram of an optical system of a fourth embodiment of the present application;
FIG. 8 is a longitudinal spherical aberration diagram, astigmatism diagram and distortion diagram of the optical system of the fourth embodiment of the present application;
FIG. 9 is a schematic structure diagram of an optical system of a fifth embodiment of the present application;
FIG. 10 is a longitudinal spherical aberration diagram, astigmatism diagram and distortion diagram of the optical system of the fifth embodiment of the present application;
FIG. 11 is a schematic structure diagram of an optical system of a sixth embodiment of the present application;
FIG. 12 is a longitudinal spherical aberration diagram, astigmatism diagram and distortion diagram of the optical system of the sixth embodiment of the present application;
FIG. 13 is a schematic diagram of an image module of an embodiment of the present application;
FIG. 14 is a schematic diagram of an electronic device of an embodiment of the present application;
FIG. 15 is a schematic diagram of a vehicle of an embodiment of the present application.

DETAILED DESCRIPTION

In order to facilitate understanding of the present invention, the present invention will be described more fully below with reference to the relevant drawings. Preferred embodiments of the invention are shown in the accompanying drawings. However, the invention may be embodied in many different forms and is not limited to the embodiments described herein. Rather, these embodiments are provided so that a thorough understanding of the disclosure of the present invention will be provided.

It should be noted that when a component is referred to as being "fixed to" another component, the component can be directly on another component or a middle component may exist therebetween. When a component is considered to be "connected" to another component, the component can be directly connected to another component or a middle component may exist therebetween. The term "inner", "outer", "left", "right" and similar expressions used herein are for illustrative purposes only and do not represent the only implementation manner.

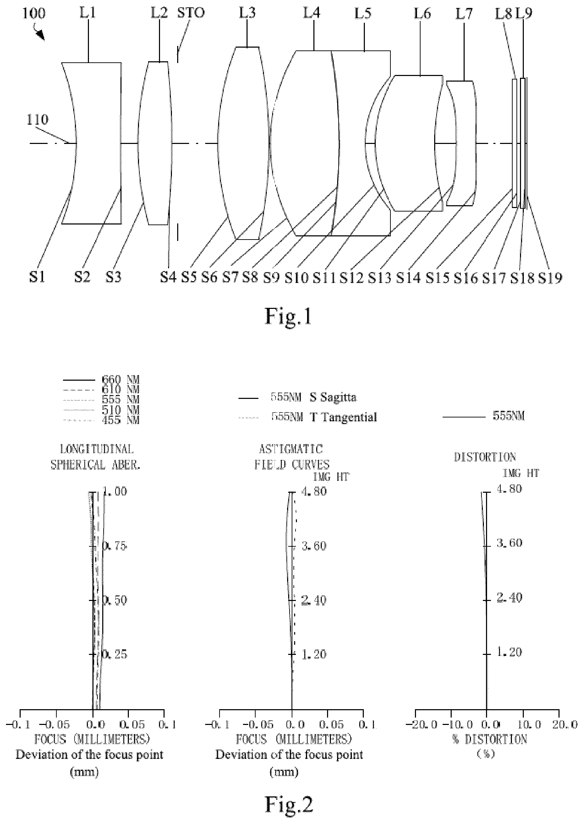

Referring to FIG. 1, an optical system 100 sequentially includes a first lens L1, a second lens L2, a third lens L3, a fourth lens L4, a fifth lens L5, a sixth lens L6 and a seventh lens L7 along an optical axis 110 from an object side to an imaging side. Specifically, the first lens L1 includes an object side surface S1 and an imaging side surface S2, the second lens L2 includes an object side surface S3 and an imaging side surface S4, the third lens L3 includes an object side surface S5 and an imaging side surface S6, the fourth lens L4 includes an object side surface S7 and an imaging side surface S8, the fifth lens L5 includes an object side surface S9 and an imaging side surface S10, the sixth lens L6 includes an object side surface S11 and an imaging side surface S12, and the seventh lens L7 includes an object side surface S13 and an imaging side surface S14. The first lens L1, the second lens L2, the third lens L3, the fourth lens L4, the fifth lens L5, the sixth lens L6, and the seventh lens L7 are coaxially arranged. A common axis of each lens in the optical system 100 is the optical axis 110 of the optical system 100.

Wherein, the first lens L1 has negative refractive power, the object side surface S1 of the first lens L1 is concave near the optical axis 110, which is beneficial to capture the light entering the system at a large angle and expand the field of view of the optical system 100, so that the field of view of the optical system 100 will not be too small when it has telephoto characteristics. The second lens L2 has positive refractive power, the object side surface S3 of the second lens L2 is convex near the optical axis 110, which is beneficial to correcting an aberration produced by the first lens L1. The third lens L3 has positive refractive power, the object side surface S5 and the imaging side surface S4 of the third lens L3 are both convex near the optical axis 110, so that the third lens L3 can effectively converge light and reduce the burden of the light convergence of each lens on the imaging side of the third lens L3, thereby preventing the surface shape of each lens on the imaging side of the third lens L3 from being too curved, and reducing the sensitivity of the optical system 100. The fourth lens L4 has positive refractive power, the fifth lens L5 has negative refractive power, the positive refractive power of the fourth lens L4 cooperates with the negative refractive power of the fifth lens L5, which is beneficial to correcting the chromatic aberration of the optical system 100. The fifth lens L5 provides negative refractive power for the optical system 100, its object side surface S9 and imaging side surface S10 are both concave near the optical axis 110, which is conducive to increasing the width of incident light, so that the light incident at a large angle is further broadened after being refracted by the fourth lens L4, thereby filling the pupil and fully transmitting to the image plane. It is conducive to obtaining a wider field of view and is conducive to matching high-pixel photosensitive elements. The sixth lens L6 has positive refractive power and can effectively condense light, which is conducive to shortening a total length of the optical system 100. The seventh lens L7 has negative refractive power, the imaging side surface S14 of the seventh lens L7 is concave near the optical axis 110, which is conducive to is helpful for correcting the aberrations produced by the lenses on the object side of the seventh lens L7 and improving the imaging quality of the optical system 100. The object side surface S13 of the seventh lens L7 is concave near the optical axis 110. The seventh lens L7 has negative refractive power, which is beneficial to expanding the beam of light to widen the large-angle light refracted by the sixth lens L6, so that the large-angle light can be fully transmitted to the image plane, thereby conducive to expanding the field of view of the optical system 100 and improving the imaging quality of the optical system 100.

In some embodiments, the fourth lens L4 and the fifth lens L5 are cemented, which is beneficial to correcting the chromatic aberration of the optical system 100 and improving the imaging quality of the optical system 100.

In addition, in some embodiments, the optical system 100 is provided with an aperture STO. The aperture STO may be disposed on the object side of the first lens L1, or between any two adjacent lenses of the optical system 100, for example, the aperture STO may be disposed between the second lens L2 and the third lens L3. In some embodiments, the optical system 100 further includes an infrared filter L8 and a protective glass L9 disposed on the imaging side of the seventh lens L7. The infrared filter L8 may be an infrared cut-off filter for filtering out interference light and preventing the interference light from reaching the imaging plane of the optical system 100 and affecting normal imaging. The protective glass L9 is used to protect the photosensitive element located on the imaging plane. Further, the optical system 100 further includes an imaging surface S19 located on the imaging side of the seventh lens L7, the imaging surface S19 is the imaging plane of the optical system 100. The incident light can be imaged on the imaging surface S19 after being adjusted by the first lens L1, the second lens L2, the third lens L3, the fourth lens L4, the fifth lens L5, the sixth lens L6, and the seventh lens L7

In some embodiments, both the object side surface and the imaging side surface of each lens of the optical system 100 are aspherical surfaces. The use of aspherical structures can improve the flexibility of lens design, effectively correct spherical aberration, and improve imaging quality. In other embodiments, the object side surface and the imaging side surface of each lens of the optical system 100 may also be spherical surface. It should be noted that the above embodiments are only examples of some embodiments of the present application. In some embodiments, the surfaces of each lens in the optical system 100 may be any combination of aspherical or spherical surfaces. For example, in some embodiments, the object side surface S3 and the imaging side surface S4 of the second lens L2 and the object side surface S13 and the imaging side surface S14 of the seventh lens L7 are all aspherical surfaces, the object side surfaces and the imaging side surfaces of the first lens L1, the third lens L3, the fourth lens L4, the fifth lens L5, and the sixth lens L6 are all spherical surfaces.

In some embodiments, the materials of all lens in the optical system 100 may be glass or plastic. The use of lenses made of plastic material can reduce the weight of the optical system 100 and reduce production costs. Cooperating with the small size of the optical system 100, a thin and light design of the optical system 100 can be achieved. The lens made of glass enables the optical system 100 to have excellent optical performance and high temperature resistance. It should be noted that the materials of the lenses in the optical system 100 may also be any combination of glass and plastic, and they do not have to be all glass or all plastic.

It should be noted that the first lens L1 does not mean that there is only one lens. In some embodiments, there may be two or more lenses in the first lens L1, and the two or more lenses can form a cemented lens. The surface of the cemented lens closest to the object side may be regarded as the object side surface S1, the surface of the cemented lens closest to the imaging side may be regarded as the imaging side surface S2. Alternatively, the lenses in the first lens L1 do not form a cemented lens, but distance between any two lenses is relatively fixed, at this time, an object side surface of the lens closest to the object side is regarded as the object side surface S1, the imaging side surface of the lens closest to the imaging side is regarded as the imaging side surface S2. In addition, the number of lenses in the second lens L2, the third lens L3, the fourth lens L4, the fifth lens L5, the sixth lens L6 or the seventh lens L7 in some embodiments may also be greater than or equal to two, and any adjacent lenses may be formed a cemented lens or a non-cemented lens.

Further, the optical system 100 satisfies the conditional expression: $-5 \leq f7/f \leq -2.5$; wherein, f7 is an effective focal length of the seventh lens L7, and f is an effective focal length of the optical system 100. Specifically, f7/f may be: -4.621, -4.553, -4.022, -3.965, -3.855, -3.410, -3.011, -2.884, -2.731, or -2.592. When the above conditional expression is satisfied, while achieving telephoto characteristics, it is helpful to improve the imaging quality of the optical system 100, thus achieving both telephoto characteristics and high imaging quality. Below the lower limit of the above conditional expression, the refractive power of the seventh lens L7 is insufficient, which is not conducive to correcting the aberration of the optical system 100; exceeding the upper limit of the above conditional expression, the refractive power of the seventh lens L7 is too strong, the imaging on the image surface S19 will be sensitive due to the change of the seventh lens L7, resulting in large aberrations and reducing the imaging quality of the optical system 100.

In some embodiments, the optical system 100 satisfies the conditional expression: $1 \leq f37/f \leq 1.5$; wherein, f37 is a combined focal length of the third lens L3, the fourth lens L4, the fifth lens L5, the sixth lens L6 and the seventh lens L7. Specifically, f37/f may be: 1.034, 1.056, 1.087, 1.112, 1.155, 1.195, 1.201, 1.225, 1.246 or 1.276. When the above conditional expression is satisfied, the proportion of the combined focal length of the third lens L3 to the seventh lens L7 in the optical system 100 can be reasonably arranged, which is conducive to the reasonable transition of light between the third lens L3 to the seventh lens L7, thereby conducive to reducing the height of light beams exiting the optical system 100, so that it is beneficial to reducing the advanced aberration of the optical system 100 and the effective aperture of each lens of in the third lens L3 to the seventh lens L7. At the same time, it is helpful to correct the field curvature generated by the first lens L1 and the second lens L2 and improve the resolution of the optical system 100. Exceeding the upper limit of the above conditional expression, the refractive power of the third lens L3 to the seventh lens L7 is insufficient, which is not conducive to correcting the field curvature of the first lens L1 and the second lens L2, and is also not conducive to reducing the exit height of the light.

In some embodiments, when the fourth lens L4 and the fifth lens L5 are cemented, the optical system 100 satisfies the conditional expression: $-4 \leq f45/f \leq -2$; wherein, f45 is a combined focal length of the fourth lens L4 and the fifth lens L5. Specifically, f45/f may be: -3.519, -3.455. -3.214, -3.031, -2.857, -2.556, -2.315, -2.295, -2.001, or -2.157. The fourth lens L4 and the fifth lens L5 are cemented, which is beneficial to correcting the chromatic aberration of the optical system 100. At the same time, the fourth lens L4 and the fifth lens L5 are cemented, the positive refractive power of the fourth lens L4 and the negative refractive power of the fifth lens L5 cooperate with each other, which is beneficial to the mutual correction of aberrations of the fourth lens L4 and the fifth lens L5. When the above conditional expression is satisfied, the proportion of the combined focal length of the fourth lens L4 and the fifth lens L5 in the optical system 100 can be reasonably arranged, which is beneficial to correcting aberrations such as chromatic aberration and astigmatism of the optical system 100 and improving the imaging quality of the optical system 100. Exceeding the upper limit of the above conditional expression, the refractive power of the cemented lens formed by the fourth lens L4 and the fifth lens L5 is too strong, so that the lens group is prone to serious astigmatism, which is not conducive to improving the imaging quality of the optical system 100; below the lower limit of the above conditional expression, the refractive power of the cemented lens formed by the fourth lens L4 and the fifth lens L5 is insufficient, which is not conducive to correcting aberrations and chromatic aberrations of the edge of the optical system 100, and thus is not conducive to improving the resolution performance of the optical system 100.

In some embodiments, the optical system 100 satisfies the conditional expression: $f45 \leq -30$. By satisfying the above conditional expression, the effective focal length of the cemented lens formed by the fourth lens L4 and the fifth lens L5 can be reasonably arranged, which is beneficial to correcting aberrations such as chromatic aberration and astigmatism of the optical system 100 and improving the imaging quality of the optical system 100.

In some embodiments, the optical system 100 satisfies the conditional expression: $5 \leq f3/CT3 \leq 9.5$; wherein, f3 is an effective focal length of the third lens L3, CT3 is a thickness of the third lens L3 at the optical axis 110. Specifically, f3/CT3 may be: 5.339, 5.774, 5.901, 6.245, 6.451, 6.772, 7.234, 7.856, 8.521 or 9.247. When the above conditional expression is satisfied, the ratio between the effective focal length and the central thickness of the third lens L3 can be reasonably arranged, the surface shape of the third lens L3 will not be too smooth, which is beneficial to suppressing the occurrence of higher order aberrations, and is also beneficial to the smooth transition of light in the third lens L3, thereby helping to reduce the sensitivity of the optical system 100; in addition, it is also beneficial to prevent the surface shape of the third lens L3 from being excessively curved, thereby facilitating the manufacturing and molding of the third lens L3. Exceeding the upper limit of the above conditional expression, the effective focal length of the third lens L3 is too large, so that the refractive power of the third lens L3 is insufficient, the surface shape of the third lens L3 is too smooth, which is not conducive to suppressing the occurrence of higher order aberrations, and thus is prone to occur serious high-order spherical aberration, coma and other phenomena that affect the resolution and imaging quality of the optical system 100; below the lower limit of the above conditional expression, the refractive power of the third lens L3 is too strong, resulting the width of the light beam to shrink rapidly, thereby increasing the incident angle of light to the lens on the imaging side, increasing the burden of the lens on the imaging side in reducing the light angle of the light exiting optical system 100, resulting in an increase in the sensitivity of the optical system 100; at the same time, the surface shape of the third lens L3 is excessively curved, which is not conducive to the molding of the third lens L3.

In some embodiments, when the fourth lens L4 and the fifth lens L5 are cemented, the optical system 100 satisfies the conditional expression: $-9.5mm*10^{-6}/°C \leq (CT4-CT5)*(\alpha4-\alpha5) \leq -6mm*10^{-6}/°C$; wherein, CT4 is a thickness of the fourth lens L4 at the optical axis 110, CT5 is a thickness of the fifth lens L5 at the optical axis 110, $\alpha4$ is a thermal expansion coefficient of the fourth lens L4 under the conditions of -30°C-70°C, $\alpha5$ is a thermal expansion coefficient of penta-lens L5 under the conditions of -30°C-70°C. Specifically, $(CT4-CT5)*(\alpha4-\alpha5)$ may be: -9.219, -8.884, -8.512, -8.014, -7.512, -7.231, -7.021, -6.553, -6.441 or -6.376, and the numerical unit is $mm*10^{-6}/°C$. When the above conditional expression is satisfied, materials and center thickness of the fourth lens L4 and the fifth lens L5 can be reasonably arranged, and the difference in the center thickness and material properties of the fourth lens L4 and the fifth lens L5 can be reduced, which is beneficial to reducing the risk of cracking of the cemented lens formed by the fourth lens L4 and the fifth lens L5 under high and low temperature conditions, thus it is beneficial to reduce the impact of temperature on the imaging quality of the optical system 100, so that the optical system 100 can have good imaging quality even under high or low temperature conditions.

In some embodiments, the optical system 100 satisfies the conditional expression: $0.9 \leq 2*ImgH/EPD \leq 1.1$; wherein, ImgH is half of the image height corresponding to the maximum field of view of the optical system 100, EPD is an entrance pupil diameter of the optical system 100. Specifically, $2*ImgH/EPD$ may be: 0.998, 0.999, 1.000, 1.001, 1.002, 1.003, 1.004 or 1.005. When the above conditional expression is satisfied, it is conducive to increasing the imaging plane of the optical system 100, so that the optical system 100 can easily match a higher resolution photosensitive element, which is beneficial to improving the imaging quality of the optical system 100, and is also beneficial to increasing the amount of incident light of the optical system 100, thus beneficial to improve the brightness of the imaging surface S19. Exceeding the upper limit of the above conditional expression, the entrance pupil diameter of the optical system 100 is too small, which is not conducive to increasing the aperture of the optical system 100, resulting in insufficient incident light of the optical system 100, so that the brightness of the imaging surface is difficult to be improved; below the lower limit of the above conditional expression, the entrance pupil diameter of the optical system 100 is too large, resulting in more serious aberrations such as astigmatism and field curvature of the edge field light beam, which is not conducive to improving the imaging quality of the optical system 100.

It should be noted that in some embodiments, the optical system 100 may be matched with a photosensitive element having a rectangular photosensitive surface, and the imaging plane of the optical system 100 coincides with the photosensitive surface of the photosensitive element. At this time, the effective pixel area on the imaging plane of the optical system 100 has a horizontal direction and a diagonal direction, then the maximum field of view FOV may be understood as the maximum field of view of the optical system 100 in the diagonal direction, ImgH may be understood as half the length of the effective pixel area on the imaging plane of the optical system 100 in the diagonal direction.

In some embodiments, the optical system 100 satisfies the conditional expression: $0.6 \leq (D12+CT2)/(CT3+D34) \leq 1.5$; wherein, D12 is a distance from the imaging side surface S2 of the first lens L1 to the object side surface S3 of the second lens L2 on the optical axis 110, CT2 is a thickness of the second lens L2 at the optical axis 110, CT3 is the thickness of the third lens L3 at the optical axis 110, D34 is the imaging side surface S6 of the third lens L3 to the object side surface S7 of the fourth lens S4 on the optical axis 110. Specifically, $(D12+CT2)/(CT3+D34)$ may be: 0.682, 0.751, 0.834, 0.995, 1.021, 1.035, 1.122, 1.387, 1.402 or 1.450. When the above conditional expression is satisfied, the distance between the first to fourth lenses will not be too small, which is conducive to the smooth transition of light, thereby conducive to suppressing the generation of aberrations, improving the imaging resolution, and also conducive to a more compact structure of the optical system 100 and enabling miniaturization design. Exceeding the upper limit of the above conditional expression, the central thickness of the second lens L2 and/or an air gap between the first lens L1 and the second lens L2 on the optical axis 110 is too large, which is not conducive to miniaturization of the system. At the same time, exceeding the upper limit of the above conditional expression, the thickness of the third lens L3 and/or an air gap between the third lens L3 and the fourth lens L4 on the optical axis 110 is too small, which is not conducive to the correction of aberrations of the optical system 100, and thus it is not conducive to improving the imaging quality of the system.

The optical system 100 satisfies the conditional expression: $3 \leq CT6/CT7 \leq 5$; wherein, CT6 is a thickness of the sixth lens L6 at the optical axis 110, CT7 is a thickness of the seventh lens L7 at the optical axis 110. Specifically, $CT6/CT7$ may be: 3.024, 3.125, 3.224, 3.359, 3.485, 3.502, 3.688, 3.951, 4.355 or 4.830. When the above conditional expression is satisfied, a ratio of the central thickness of the sixth lens L6 to the seventh lens L7 can be reasonably arranged, which is conducive to shortening a total length of the optical system 100 and achieving a miniaturized design, at the same time, the refractive power relationship between the sixth lens L6 and the seventh lens L7 can be effectively adjusted, which is conducive to reducing the exit angle of the light emitting from the optical system 100, and allows the light to be nearly vertically incident on the photosensitive element, so that the optical system 100 has telecentric characteristics, the sensitivity of the photosensitive element is improved, and the possibility of vignetting generated by the system is reduced; exceeding the upper limit of the relationship, the refraction of the seventh lens L7 is insufficient, which is not conducive to the correction of aberrations of the optical system 100.

Based on the description of the above embodiments, more specific embodiments and drawings are provided below for detailed description.

First embodiment

Please refer to FIG. 1 and FIG. 2, FIG. 1 is a schematic structural diagram of the optical system 100 of the first embodiment, the optical system 100 sequentially includes a first lens L1 having negative refractive power, a second lens L2 having positive refractive power, an aperture STO, a third lens L3 having positive refractive power, a fourth lens L4 having positive refractive power, a fifth lens L5 having negative refractive power, a sixth lens L6 having positive refractive power, and a seventh lens L7 having negative refractive power along an optical axis 110 from an object side to an imaging side. The fourth lens L4 and the fifth lens L5 are cemented. FIG. 2 shows the graphs of longitudinal spherical aberration, astigmatism and distortion of the optical system 100 in the first embodiment from left to right, in which the reference wavelength of the astigmatism diagram and the distortion diagram is 555nm.

An object side surface S1 of the first lens L1 is concave near the optical axis 110, and an imaging side surface S2 is concave near the optical axis 110.

An object side surface S3 of the second lens L2 is convex near the optical axis 110, and an imaging side surface S4 is convex near the optical axis 110.

An object side surface S5 of the third lens L3 is convex near the optical axis 110, and an imaging side surface S6 is convex near the optical axis 110.

An object side surface S7 of the fourth lens L4 is convex near the optical axis 110, and an imaging side surface S8 is convex near the optical axis 110.

An object side surface S9 of the fifth lens L5 is concave near the optical axis 110, and an imaging side surface S10 is concave near the optical axis 110.

An object side surface S11 of the sixth lens L6 is convex near the optical axis 110, and an imaging side surface S12 is concave near the optical axis 110.

An object side surface S13 of the seventh lens L7 is concave near the optical axis 110, and an imaging side surface S14 is concave near the optical axis 110.

The object side surfaces and the imaging side surfaces of the second lens L2 and the seventh lens L7 are both aspherical surfaces, the object side surfaces and the imaging side surfaces of the first lens L1, the third lens L3, the fourth lens L4, the fifth lens L5, and the sixth lens L6 are both spherical surfaces.

The first lens L1, the second lens L2, the third lens L3, the fourth lens L4, the fifth lens L5, the sixth lens L6 and the seventh lens L7 are all made of glass.

Further, the optical system 100 satisfies the conditional expression: f7/f=-2.592; wherein, f7 is an effective focal length of the seventh lens L7, and f is an effective focal length of the optical system 100. When the above conditional expression is satisfied, while achieving telephoto characteristics, it is helpful to improve the imaging quality of the optical system 100, thus achieving both telephoto characteristics and high imaging quality. Below the lower limit of the above conditional expression, the refractive power of the seventh lens L7 is insufficient, which is not conducive to correcting the aberration of the optical system 100; exceeding the upper limit of the above conditional expression, the refractive power of the seventh lens L7 is too strong, the imaging on the image surface S19 will be sensitive due to the change of the seventh lens L7, resulting in large aberrations and reducing the imaging quality of the optical system 100.

The optical system 100 satisfies the conditional expression: f37/f=1.232; wherein, f37 is a combined focal length of the third lens L3, the fourth lens L4, the fifth lens L5, the sixth lens L6 and the seventh lens L7. When the above conditional expression is satisfied, the proportion of the combined focal length of the third lens L3 to the seventh lens L7 in the optical system 100 can be reasonably arranged, which is conducive to the reasonable transition of light between the third lens L3 to the seventh lens L7, thereby conducive to reducing the height of light beams exiting the optical system 100, so that it is beneficial to reducing the advanced aberration of the optical system 100 and the effective aperture of each lens of in the third lens L3 to the seventh lens L7; at the same time, it is helpful to correct the field curvature generated by the first lens L1 and the second lens L2 and improve the resolution of the optical system 100. Exceeding the upper limit of the above conditional expression, the refractive power of the third lens L3 to the seventh lens L7 is insufficient, which is not conducive to correcting the field curvature of the first lens L1 and the second lens L2, and is also not conducive to reducing the exit height of the light.

The optical system 100 satisfies the conditional expression: f45/f=-2.213; wherein, f45 is a combined focal length of the fourth lens L4 and the fifth lens L5. The fourth lens L4 and the fifth lens L5 are cemented, which is beneficial to correcting the chromatic aberration of the optical system 100, at the same time, the fourth lens L4 and the fifth lens L5 are cemented, the positive refractive power of the fourth lens L4 and the negative refractive power of the fifth lens L5 cooperate with each other, which is beneficial to the mutual correction of aberrations of the fourth lens L4 and the fifth lens L5. When the above conditional expression is satisfied, the proportion of the combined focal length of the fourth lens L4 and the fifth lens L5 in the optical system 100 can be reasonably arranged, which is beneficial to correcting aberrations such as chromatic aberration and astigmatism of the optical system 100 and improving the imaging quality of the optical system 100.

The optical system 100 satisfies the conditional expression: f45=-34.009mm. When the above conditional expression is satisfied, it is beneficial for the fourth lens L4 and the fifth lens L5 to correct aberrations such as chromatic aberration and astigmatism of the optical system 100 and improve the imaging quality of the optical system 100.

The optical system 100 satisfies the conditional expression:f3/CT3=6.617; wherein, f3 is an effective focal length of the third lens L3, CT3 is a thickness of the third lens L3 at the optical axis 110. When the above conditional expression is satisfied, the ratio between the effective focal length and the central thickness of the third lens L3 can be reasonably arranged, so that the refractive power of the third lens L3 is arranged more reasonably, the surface shape of the third lens L3 will not be too smooth, which is beneficial to suppressing the occurrence of higher order aberrations, and is also beneficial to the smooth transition of light in the third lens L3, thereby helping to reduce the sensitivity of the optical system 100; in addition, it is also beneficial to prevent the surface shape of the third lens L3 from being excessively curved, thereby facilitating the manufacturing and molding of the third lens L3. Exceeding the upper limit of the above conditional expression, the effective focal length of the third lens L3 is too large, so that the refractive power of the third lens L3 is insufficient, the surface shape of the third lens L3 is too smooth, which is not conducive to suppressing the occurrence of higher order aberrations, and thus is prone to occur serious high-order spherical aberration, coma and other phenomena that affect the resolution and imaging quality of the optical system 100; below the lower limit of the above conditional expression, the refractive power of the third lens L3 is too strong, resulting the width of the light beam to shrink rapidly, thereby increasing the incident angle of light to the lens on the imaging side, increasing the burden of the lens on the imaging side in reducing the light angle of the light exiting optical system 100, resulting in an increase in the sensitivity of the optical system 100; at the same time, the surface shape of the third lens L3 is excessively curved, which is not conducive to the molding of the third lens L3.

The optical system 100 satisfies the conditional expression: $(CT4-CT5)*(\alpha4-\alpha5) = -9.184mm*10^{-6}/°C$; wherein, CT4 is a thickness of the fourth lens L4 at the optical axis 110, CT5 is a thickness of the fifth lens L5 at the optical axis 110, $\alpha4$ is a thermal expansion coefficient of the fourth lens L4 under the conditions of -30°C-70°C, $\alpha5$ is a thermal expansion coefficient of penta-lens L5 under the conditions of -30°C-70°C. When the above conditional expression is satisfied, materials and center thickness of the fourth lens L4 and the fifth lens L5 can be reasonably arranged, and the difference in the center thickness and material properties of the fourth lens L4 and the fifth lens L5 can be reduced, which is beneficial to reducing the risk of cracking of the cemented lens formed by the fourth lens L4 and the fifth lens L5 under high and low temperature conditions, thus it is beneficial to reduce the impact of temperature on the imaging quality of the optical system 100, so that the optical system 100 can have good imaging quality even under high or low temperature conditions.

The optical system 100 satisfies the conditional expression: $2*ImgH/EPD=0.999$; wherein, ImgH is half of the image height corresponding to the maximum field of view of the optical system 100, EPD is an entrance pupil diameter of the optical system 100. When the above conditional expression is satisfied, it is conducive to increasing the imaging plane of the optical system 100, so that the optical system 100 can easily match a higher resolution photosensitive element, which is beneficial to improving the imaging quality of the optical system 100, and is also beneficial to increasing the amount of incident light of the optical system 100, thus beneficial to improve the brightness of the imaging surface S19. Exceeding the upper limit of the above conditional expression, the entrance pupil diameter of the optical system 100 is too small, which is not conducive to increasing the aperture of the optical system 100, resulting in insufficient incident light of the optical system 100, so that the brightness of the imaging surface is difficult to be improved; below the lower limit of the above conditional expression, the entrance pupil diameter of the optical system 100 is too large, resulting in more serious aberrations such as astigmatism and field curvature of the edge field light beam, which is not conducive to improving the imaging quality of the optical system 100.

The optical system 100 satisfies the conditional expression: $(D12+CT2)/(CT3+D34)=0.981$; wherein, D12 is a distance from the imaging side surface S2 of the first lens L1 to the object side surface S3 of the second lens L2 on the optical axis 110, CT2 is a thickness of the second lens L2 at the optical axis 110, CT3 is the thickness of the third lens L3 at the optical axis 110, D34 is the imaging side surface S6 of the third lens L3 to the object side surface S7 of the fourth lens S4 on the optical axis 110. When the above conditional expression is satisfied, the distance between the first to fourth lenses will not be too small, which is conducive to the smooth transition of light, thereby conducive to suppressing the generation of aberrations, improving the imaging resolution, and also conducive to a more compact structure of the optical system 100 and enabling miniaturization design.

The optical system 100 satisfies the conditional expression: $CT6/CT7=3.031$; wherein, CT6 is a thickness of the sixth lens L6 at the optical axis 110, CT7 is a thickness of the seventh lens L7 at the optical axis 110. When the above conditional expression is satisfied, a ratio of the central thickness of the sixth lens L6 to the seventh lens L7 can be reasonably arranged, which is conducive to shortening a total length of the optical system 100 and achieving a miniaturized design, at the same time, the refractive power relationship between the sixth lens L6 and the seventh lens L7 can be effectively adjusted, which is conducive to reducing the exit angle of the light emitting from the optical system 100, and allows the light to be nearly vertically incident on the photosensitive element, so that the optical system 100 has telecentric characteristics, the sensitivity of the photosensitive element is improved, and the possibility of vignetting generated by the system is reduced.

In addition, various parameters of the optical system 100 are given in Table 1. Wherein, the imaging surface S19 in Table 1 may be understood as the imaging plane of the optical system 100. The elements from the object surface (not shown in figure) to the imaging surface S19 are arranged in sequence according to the order of the elements from top to bottom in Table 1. The Y radius in Table 1 is the curvature radius of the object side surface or the imaging side surface of the corresponding surface number at the optical axis 110. The surface number S1 and the surface number S2 are the object side surface S1 and the imaging side surface S2 of the first lens L1, that is, in the same lens, the surface with a smaller surface number is the object side surface, the surface with a larger surface number is the imaging side surface. The first value in the "Thickness" parameter column of the first lens L1 is the thickness of the lens at the optical axis 110, and the second value is a distance from the imaging side surface of the lens to a rear surface in an imaging side direction on the optical axis 110.

It should be noted that in this embodiment and the following embodiments, the optical system 100 may not be provided with an infrared filter L8 and a protective glass L9, but at this time, the distance from the imaging side surface S14 of the seventh lens L7 to the imaging surface S19 remains unchanged.

In the first embodiment, the effective focal length of the optical system 100 is f=15.37mm, the maximum field of view FOV=35.2°, and the aperture number FNO=1.6. In the first embodiment and other embodiments, the effective focal length of the optical system 100 satisfies: f≥15.28mm, which shows that the optical system 100 has telephoto characteristics, and the half-image height of the optical system 100 satisfies: ImgH=4.8mm, which shows that the optical system 100 can match high-pixel photosensitive elements and can meet the design requirements of high-pixel and high-resolution, the optical system 100 can achieve both telephoto characteristics and high imaging quality.

The reference wavelength for the focal length of each lens is 555nm, and the reference wavelength for the refractive index and Abbe number is 587.56nm (d line).

Table 1

| First embodiment | | | | | | | | |
|---|---|---|---|---|---|---|---|---|
| f=15.37mm, FNO=1.6 FOV=35.2° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S1 | First lens | sphere | -16.697 | 3.308 | glass | 1.804 | 46.568 | -19.417 |
| S2 | | sphere | 278.172 | 1.281 | | | | |
| S3 | Second lens | asphere | 21.501 | 2.525 | glass | 1.694 | 53.151 | 21.944 |
| S4 | | asphere | -50.240 | 0.404 | | | | |
| STO | Aperture | sphere | infinity | 3.019 | | | | |
| S5 | Third lens | sphere | 19.251 | 3.781 | glass | 1.497 | 81.595 | 25.017 |
| S6 | | sphere | -33.024 | 0.100 | | | | |
| S7 | Fourth lens | sphere | 13.000 | 5.094 | glass | 1.620 | 60.374 | 16.252 |
| S9 | Fifth lens | sphere | -38.700 | 1.927 | glass | 1.689 | 31.161 | -8.707 |
| S10 | | sphere | 7.293 | 0.746 | | | | |
| S11 | Sixth lens | sphere | 9.118 | 4.401 | glass | 1.773 | 49.614 | 20.961 |
| S12 | | sphere | 16.393 | 1.589 | | | | |
| S13 | Seventh lens | asphere | -65.089 | 1.452 | glass | 1.621 | 63.876 | -39.839 |
| S14 | | asphere | 40.424 | 2.744 | | | | |
| S15 | Infrared filter | sphere | infinity | 0.300 | glass | 1.517 | 64.212 | |
| S16 | | sphere | infinity | 0.300 | | | | |
| S17 | Protective glass | sphere | infinity | 0.300 | glass | 1.517 | 64.212 | |
| S18 | | sphere | infinity | *0.150* | | | | |
| S19 | Imaging surface | sphere | infinity | 0.000 | | | | |

Further, the aspheric coefficients of the object side surfaces or the imaging side surfaces of the second lens L2 and the seventh lens L7 are given in Table 2. Wherein, the surface numbers S3 and S4 respectively represent the object side surface S3 and the imaging side surface S4 of the second lens L2, the surface numbers S13 and S14 respectively represent the object side surface S13 and the imaging side surface S14 of the seventh lens L7. K-A20 from top to bottom respectively represent the type of aspherical coefficient, wherein, K represents the conic coefficient, A4 represents the fourth-order aspherical coefficient, A6 represents the sixth-order aspherical coefficient, and A8 represents the eighth-order aspherical coefficient, and so on. In addition, the aspheric coefficient formula is as follows:

$$Z = \frac{cr^2}{1 + \sqrt{1 - (k+1)c^2r^2}} + \sum_i Ai\, r^i$$

Wherein, Z is a distance from the corresponding point on the aspheric surface to the plane tangent to the surface vertex, r is the distance from the corresponding point on the aspheric surface to the optical axis 110, c is the curvature of the aspheric surface vertex, k is the cone coefficient, Ai is the coefficient corresponding to the i-th higher-order term in the aspheric surface shape formula.

Table 2

| Surface number | S3 | S4 | S13 | S14 |
|---|---|---|---|---|
| K | 0.00E+00 | 0.00E+00 | 0.00E+00 | 0.00E+00 |
| A4 | -8.75E-05 | 7.89E-05 | -9.96E-03 | -7.30E-03 |
| A6 | 1.10E-06 | 7.87E-07 | 5.23E-06 | 2.87E-06 |
| A8 | -3.68E-08 | -2.29E-08 | 2.20E-07 | 1.44E-06 |
| A10 | 7.89E-10 | 3.64E-10 | -5.66E-09 | -5.21E-08 |
| A12 | -4.66E-12 | -1.21E-12 | -3.67E-10 | 7.60E-10 |
| A14 | 0.00E+00 | 0.00E+00 | 0.00E+00 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

In addition, FIG. 2 includes a longitudinal spherical aberration diagram of the optical system 100, which represents a deviation of the convergence focus of light of different wavelengths after passing through the lenses. The ordinate of the longitudinal spherical aberration diagram represents a normalized pupil coordinator from the pupil center to the pupil edge, the abscissa represents a distance (unit: mm) from the imaging plane to the intersection point of the light ray and the optical axis 110. It can be seen from the longitudinal spherical aberration diagram that, the degree of deviation of the focus point of light of each wavelength in the first embodiment tends to be consistent, and the diffuse spots or color halo in the imaging picture are effectively suppressed. FIG. 2 also includes a field curvature diagram (ASTIGMATIC FIELD CURVES) of the optical system 100, in which the S curve represents a sagittal field curvature at 555nm, and the T curve represents a meridional field curvature at 555nm. It can be seen from the figure that the field curvature of the optical system 100 is small, the field curvature and astigmatism of each field of view are all well corrected, and the center and edge of the field of view have clear imaging. Figure 2 also includes a distortion diagram of the optical system 100, it can be seen from the figure that the image distortion caused by the main beam is small, and the imaging quality of the system is excellent.

Second embodiment

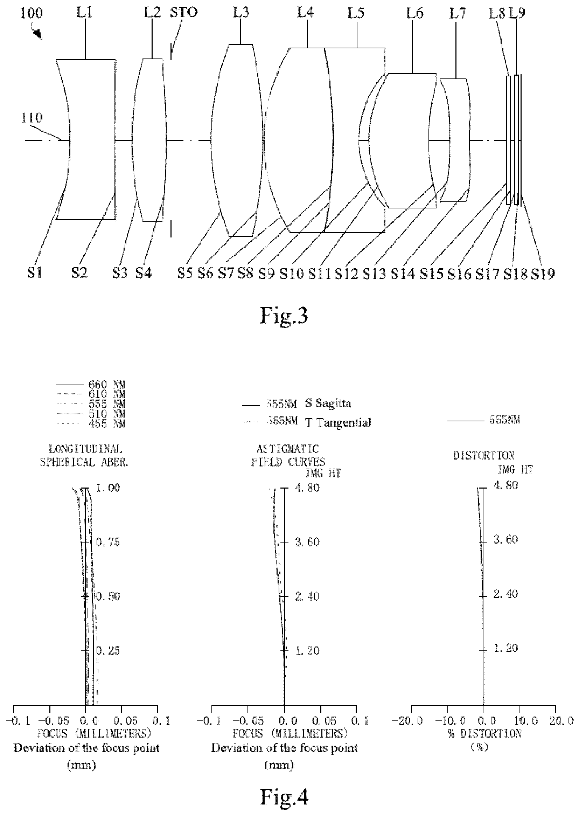

Please refer to FIG. 3 and FIG. 4, FIG. 3 is a schematic structural diagram of the optical system 100 of the second embodiment, the optical system 100 sequentially includes a first lens L1 having negative refractive power, a second lens L2 having positive refractive power, an aperture STO, a third lens L3 having positive refractive power, a fourth lens L4 having positive refractive power, a fifth lens L5 having negative refractive power, a sixth lens L6 having positive refractive power, and a seventh lens L7 having negative refractive power along an optical axis 110 from an object side to an imaging side. The fourth lens L4 and the fifth lens L5 are cemented, and f45=-33.124mm. FIG. 4 shows the graphs of longitudinal spherical aberration, astigmatism and distortion of the optical system 100 in the second embodiment from left to right, in which the reference wavelength of the astigmatism diagram and the distortion diagram is 555nm.

An object side surface S1 of the first lens L1 is concave near the optical axis 110, and an imaging side surface S2 is concave near the optical axis 110.

An object side surface S3 of the second lens L2 is convex near the optical axis 110, and an imaging side surface S4 is convex near the optical axis 110.

An object side surface S5 of the third lens L3 is convex near the optical axis 110, and an imaging side surface S6 is convex near the optical axis 110.

An object side surface S7 of the fourth lens L4 is convex near the optical axis 110, and an imaging side surface S8 is convex near the optical axis 110.

An object side surface S9 of the fifth lens L5 is concave near the optical axis 110, and an imaging side surface S10 is concave near the optical axis 110.

An object side surface S11 of the sixth lens L6 is convex near the optical axis 110, and an imaging side surface S12 is concave near the optical axis 110.

An object side surface S13 of the seventh lens L7 is concave near the optical axis 110, and an imaging side surface S14 is concave near the optical axis 110.

The object side surfaces and the imaging side surfaces of the second lens L2 and the seventh lens L7 are both aspherical surfaces, the object side surfaces and the imaging side surfaces of the first lens L1, the third lens L3, the fourth lens L4, the fifth lens L5, and the sixth lens L6 are both spherical surfaces.

The first lens L1, the second lens L2, the third lens L3, the fourth lens L4, the fifth lens L5, the sixth lens L6 and the seventh lens L7 are all made of glass.

In addition, various parameters of the optical system 100 are given in Table 3, and the definitions of each parameter can be derived from the first embodiment and will not be described again here.

The reference wavelength for the focal length of each lens is 555nm, and the reference wavelength for the refractive index and Abbe number is 587.56nm (d line).

Table 3

| Second embodiment | | | | | | | | |
|---|---|---|---|---|---|---|---|---|
| f=15.36mm, FNO=1.6, FOV=35° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S1 | First lens | sphere | -16.638 | 3.307 | glass | 1.804 | 46.568 | -19.434 |
| S2 | | sphere | 298.480 | 1.289 | | | | |
| S3 | Second lens | asphere | 21.690 | 2.566 | glass | 1.694 | 53.151 | 22.030 |
| S4 | | asphere | -49.831 | 0.311 | | | | |
| STO | Aperture | sphere | infinity | 3.018 | | | | |
| S5 | Third lens | sphere | 19.115 | 3.832 | glass | 1.497 | 81.595 | 24.805 |
| S6 | | sphere | -32.613 | 0.100 | | | | |
| S7 | Fourth lens | sphere | 13.081 | 5.101 | glass | 1.620 | 60.374 | 15.900 |
| S9 | Fifth lens | sphere | -34.543 | 1.922 | glass | 1.689 | 31.161 | -8.515 |
| S10 | | sphere | 7.277 | 0.748 | | | | |
| S11 | Sixth lens | sphere | 9.074 | 4.400 | glass | 1.773 | 49.614 | 21.004 |
| S12 | | sphere | 16.153 | 1.586 | | | | |
| S13 | Seventh lens | asphere | -73.774 | 1.455 | glass | 1.621 | 63.876 | -41.704 |
| S14 | | asphere | 40.375 | 2.751 | | | | |
| S15 | Infrared filter | sphere | infinity | 0.300 | glass | 1.517 | 64.212 | |
| S16 | | sphere | infinity | 0.300 | | | | |
| S17 | Protective glass | sphere | infinity | 0.300 | glass | 1.517 | 64.212 | |
| S18 | | sphere | infinity | 0.150 | | | | |

(continued)

| Second embodiment | | | | | | | | |
|---|---|---|---|---|---|---|---|---|
| f=15.36mm, FNO=1.6, FOV=35° | | | | | | | | |
| Surface number | Surface name | Surface type | Y radius (mm) | Thickness (mm) | Material | Refractive index | Abbe number | Focal length (mm) |
| S19 | Imaging surface | sphere | infinity | 0.000 | | | | |

Furthermore, the aspherical coefficients of the imaging side surface and the object side surface of each lens of the optical system 100 are given in Table 4, and the definitions of each parameter can be derived from the first embodiment and will not be described again here.

Table 4

| Surface number | S3 | S4 | S13 | S14 |
|---|---|---|---|---|
| K | 0.00E+00 | 0.00E+00 | 0.00E+00 | 0.00E+00 |
| A4 | -9.81E-05 | 1.17E-05 | -6.84E-03 | -4.78E-03 |
| A6 | 9.82E-07 | 6.02E-07 | 8.65E-05 | 4.07E-05 |
| A8 | -3.53E-08 | -8.35E-09 | -5.37E-07 | -1.16E-06 |
| A10 | 5.11E-10 | -4.36E-10 | 3.44E-07 | 6.28E-08 |
| A12 | 1.84E-12 | 2.15E-11 | -1.91E-08 | -1.32E-09 |
| A14 | -7.16E-14 | -2.04E-13 | 1.61E-10 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

Based on the parameter information provided above, the following data can be derived:

| f7/f | -2.715 | (CT4-CT5)*($\alpha$4-$\alpha$5) | -9.219 |
|---|---|---|---|
| f37/f | 1.231 | 2*ImgH/EPD | 1.000 |
| f45/f | -2.157 | (D12+CT2)/(CT3+D34) | 0.980 |
| f3/CT3 | 6.474 | CT6/CT7 | 3.024 |

In addition, it can be seen from the aberration diagram in FIG. 4 that the longitudinal spherical aberration, field curvature and distortion of the optical system 100 are well controlled, so that the optical system 100 of this embodiment has good imaging quality.

Third embodiment

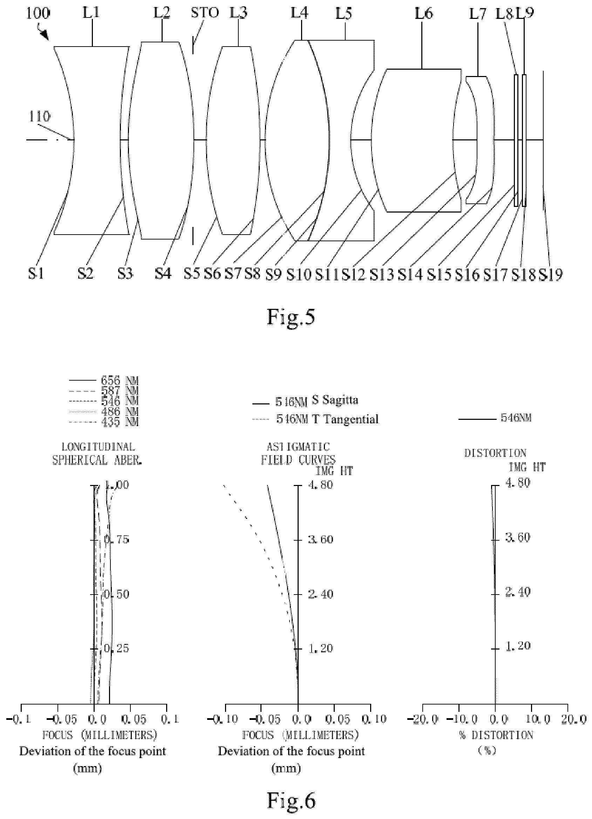

Please refer to FIG. 5 and FIG. 6, FIG. 5 is a schematic structural diagram of the optical system 100 of the third embodiment, the optical system 100 sequentially includes a first lens L1 having negative refractive power, a second lens L2 having positive refractive power, an aperture STO, a third lens L3 having positive refractive power, a fourth lens L4 having positive refractive power, a fifth lens L5 having negative refractive power, a sixth lens L6 having positive refractive power, and a seventh lens L7 having negative refractive power along an optical axis 110 from an object side to an imaging side. The fourth lens L4 and the fifth lens L5 are cemented, and f45=-53.771mm. FIG. 6 shows the graphs of longitudinal spherical aberration, astigmatism and distortion of the optical system 100 in the second embodiment from left to right, in which the reference wavelength of the astigmatism diagram and the distortion diagram is 546nm.

An object side surface S1 of the first lens L1 is concave near the optical axis 110, and an imaging side surface S2 is concave near the optical axis 110.

An object side surface S3 of the second lens L2 is convex near the optical axis 110, and an imaging side surface S4 is convex near the optical axis 110.

An object side surface S5 of the third lens L3 is convex near the optical axis 110, and an imaging side surface S6 is convex near the optical axis 110.

An object side surface S7 of the fourth lens L4 is convex near the optical axis 110, and an imaging side surface S8 is convex near the optical axis 110.

An object side surface S9 of the fifth lens L5 is concave near the optical axis 110, and an imaging side surface S10 is concave near the optical axis 110.

An object side surface S11 of the sixth lens L6 is convex near the optical axis 110, and an imaging side surface S12 is concave near the optical axis 110.

An object side surface S13 of the seventh lens L7 is concave near the optical axis 110, and an imaging side surface S14 is concave near the optical axis 110.

The object side surfaces and the imaging side surfaces of the second lens L2 and the seventh lens L7 are both aspherical surfaces, the object side surfaces and the imaging side surfaces of the first lens L1, the third lens L3, the fourth lens L4, the fifth lens L5, and the sixth lens L6 are both spherical surfaces.

The first lens L1, the second lens L2, the third lens L3, the fourth lens L4, the fifth lens L5, the sixth lens L6 and the seventh lens L7 are all made of glass.

In addition, various parameters of the optical system 100 are given in Table 5, and the definitions of each parameter can be derived from the first embodiment and will not be described again here.

The reference wavelength for the focal length of each lens is 546nm, and the reference wavelength for the refractive index and Abbe number is 587.56nm (d line).

Table 5

| Third embodiment | | | | | | | | |
|---|---|---|---|---|---|---|---|---|
| f=15.28mm, FNO=1.6, FOV=35° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S1 | First lens | sphere | -15.614 | 3.315 | glass | 1.804 | 46.568 | -13.864 |
| S2 | | sphere | 35.143 | 0.584 | | | | |
| S3 | Second lens | asphere | 20.253 | 4.693 | glass | 1.694 | 53.151 | 16.616 |
| S4 | | asphere | -24.472 | -0.044 | | | | |
| STO | Aperture | sphere | infinity | 0.911 | | | | |
| S5 | Third lens | sphere | 19.473 | 3.852 | glass | 1.497 | 81.595 | 25.000 |
| S6 | | sphere | -32.331 | 0.361 | | | | |
| S7 | Fourth lens | sphere | 13.000 | 4.551 | glass | 1.620 | 60.374 | 12.615 |
| S9 | Fifth lens | sphere | -17.193 | 1.527 | glass | 1.689 | 31.161 | -8.351 |
| S10 | | sphere | 8.252 | 1.464 | | | | |
| S11 | Sixth lens | sphere | 11.990 | 5.815 | glass | 1.773 | 49.614 | 40.345 |
| S12 | | sphere | 15.309 | 1.737 | | | | |
| S13 | Seventh lens | asphere | -77.709 | 1.204 | glass | 1.621 | 63.876 | -65.944 |
| S14 | | asphere | 87.741 | 1.417 | | | | |
| S15 | Infrared filter | sphere | infinity | 0.300 | glass | 1.517 | 64.212 | |
| S16 | | sphere | infinity | 0.300 | | | | |

(continued)

| Third embodiment | | | | | | | | |
|---|---|---|---|---|---|---|---|---|
| f=15.28mm, FNO=1.6, FOV=35° | | | | | | | | |
| Surface number | Surface name | Surface type | Y radius (mm) | Thickness (mm) | Material | Refractive index | Abbe number | Focal length (mm) |
| S17 | Protective glass | sphere | infinity | 0.300 | glass | 1.517 | 64.212 | |
| S18 | | sphere | infinity | 1.184 | | | | |
| S19 | Imaging surface | sphere | infinity | 0.000 | | | | |

Furthermore, the aspherical coefficients of the imaging side surface and the object side surface of each lens of the optical system 100 are given in Table 6, and the definitions of each parameter can be derived from the first embodiment and will not be described again here.

Table 6

| Surface number | S3 | S4 | S13 | S14 |
|---|---|---|---|---|
| K | 0.00E+00 | 0.00E+00 | 0.00E+00 | 0.00E+00 |
| A4 | -2.52E-06 | -9.99E-06 | -4.74E-04 | -5.54E-03 |
| A6 | -1.29E-07 | -4.80E-07 | 5.81E-06 | 3.63E-05 |
| A8 | 1.90E-09 | 1.45E-08 | -1.96E-07 | -4.08E-08 |
| A10 | -1.31E-10 | -3.95E-10 | -3.09E-08 | -1.77E-08 |
| A12 | 1.31E-12 | 2.95E-12 | 1.30E-09 | 7.61E-10 |
| A14 | 0.00E+00 | 0.00E+00 | 0.00E+00 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

Based on the parameter information provided above, the following data can be derived:

| f7/f | -4.316 | (CT4-CT5)*($\alpha$4-$\alpha$5) | -8.770 |
|---|---|---|---|
| f37/f | 1.276 | 2*ImgH/EPD | *1.005* |
| f45/f | -3.519 | (D12+CT2)/(CT3+D34) | 1.252 |
| f3/CT3 | 6.490 | CT6/CT7 | 4.830 |

In addition, it can be seen from the aberration diagram in FIG. 6 that the longitudinal spherical aberration, field curvature and distortion of the optical system 100 are well controlled, so that the optical system 100 of this embodiment has good imaging quality.

Fourth embodiment

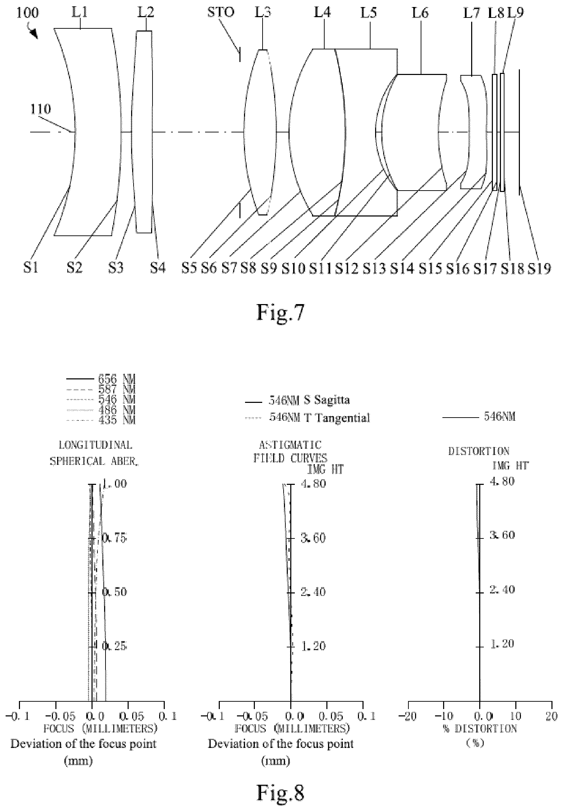

Please refer to FIG. 7 and FIG. 8, FIG. 7 is a schematic structural diagram of the optical system 100 of the fourth embodiment, the optical system 100 sequentially includes a first lens L1 having negative refractive power, a second lens L2 having positive refractive power, an aperture STO, a third lens L3 having positive refractive power, a fourth lens L4 having positive refractive power, a fifth lens L5 having negative refractive power, a sixth lens L6 having positive refractive power, and a seventh lens L7 having negative refractive power along an optical axis 110 from an object side to an imaging side. The fourth lens L4 and the fifth lens L5 are cemented, and f45=-41.995mm. FIG. 8 shows the graphs of longitudinal spherical aberration, astigmatism and distortion of the optical system 100 in the second embodiment from left to right, in which the reference wavelength of the astigmatism diagram and the distortion diagram is 546nm.

An object side surface S1 of the first lens L1 is concave near the optical axis 110, and an imaging side surface S2 is concave near the optical axis 110.

An object side surface S3 of the second lens L2 is convex near the optical axis 110, and an imaging side surface S4 is concave near the optical axis 110.

An object side surface S5 of the third lens L3 is convex near the optical axis 110, and an imaging side surface S6 is convex near the optical axis 110.

An object side surface S7 of the fourth lens L4 is convex near the optical axis 110, and an imaging side surface S8 is convex near the optical axis 110.

An object side surface S9 of the fifth lens L5 is concave near the optical axis 110, and an imaging side surface S10 is concave near the optical axis 110.

An object side surface S11 of the sixth lens L6 is convex near the optical axis 110, and an imaging side surface S12 is concave near the optical axis 110.

An object side surface S13 of the seventh lens L7 is concave near the optical axis 110, and an imaging side surface S14 is concave near the optical axis 110.

The object side surfaces and the imaging side surfaces of the second lens L2 and the seventh lens L7 are both aspherical surfaces, the object side surfaces and the imaging side surfaces of the first lens L1, the third lens L3, the fourth lens L4, the fifth lens L5, and the sixth lens L6 are both spherical surfaces.

The first lens L1, the second lens L2, the third lens L3, the fourth lens L4, the fifth lens L5, the sixth lens L6 and the seventh lens L7 are all made of glass.

In addition, various parameters of the optical system 100 are given in Table 7, and the definitions of each parameter can be derived from the first embodiment and will not be described again here.

The reference wavelength for the focal length of each lens is 546nm, and the reference wavelength for the refractive index and Abbe number is 587.56nm (d line).

Table 7

| Fourth embodiment | | | | | | | | |
|---|---|---|---|---|---|---|---|---|
| f=15.31mm FNO=1.6, FOV=35.1° | | | | | | | | |
| Surface number | Surface name | Surface type | Y radius (mm) | Thickness (mm) | Material | Refractive index | Abbe number | Focal length (mm) |
|  | Object side | sphere | infinity | infinity |  |  |  |  |
| S1 | First lens | sphere | -20.395 | 3.632 | glass | 1.744 | 44.904 | -55.731 |
| S2 | | sphere | -42.978 | 0.810 | | | | |
| S3 | Second lens | asphere | 44.609 | 1.643 | glass | 1.694 | 53.151 | 73.622 |
| S4 | | asphere | 336.347 | 6.932 | | | | |
| STO | Aperture | sphere | infinity | 0.301 |  |  |  |  |
| S5 | Third lens | sphere | 18.329 | 2.530 | glass | 1.497 | 81.595 | 23.392 |
| S6 | | sphere | -30.574 | 1.014 | | | | |
| S7 | Fourth lens | sphere | 12.180 | 4.449 | glass | 1.620 | 60.368 | 13.958 |
| S9 | Fifth lens | sphere | -26.116 | 2.392 | glass | 1.648 | 33.842 | -8.173 |
| S10 | | sphere | 6.940 | 0.481 | | | | |
| S11 | Sixth lens | sphere | 8.846 | 4.442 | glass | 1.774 | 49.604 | 34.562 |
| S12 | | sphere | 13.098 | 2.449 | | | | |
| S13 | Seventh lens | asphere | -150.577 | 1.359 | glass | 1.583 | 59.416 | -70.754 |
| S14 | | asphere | 36.307 | 0.492 | | | | |

(continued)

| Fourth embodiment | | | | | | | | |
|---|---|---|---|---|---|---|---|---|
| f=15.31mm FNO=1.6, FOV=35.1° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S15 | Infrared filter | sphere | infinity | 0.900 | glass | 1.517 | 64.212 | |
| S16 | | sphere | infinity | 0.000 | | | | |
| S17 | Protective | sphere | infinity | 0.000 | glass | 1.517 | 64.212 | |
| S18 | glass | sphere | infinity | 1.183 | | | | |
| S19 | Imaging surface | sphere | infinity | 0.000 | | | | |

Furthermore, the aspherical coefficients of the imaging side surface and the object side surface of each lens of the optical system 100 are given in Table 8, and the definitions of each parameter can be derived from the first embodiment and will not be described again here.

Table 8

| Surface number | S3 | S4 | S13 | S14 |
|---|---|---|---|---|
| K | 4.84E+00 | -5.09E+02 | 0.00E+00 | 2.13E+01 |
| A4 | -1.40E-05 | -7.06E-05 | -4.82E-03 | -4.55E-03 |
| A6 | -6.62E-07 | -9.11E-07 | 9.75E-06 | 3.51E-05 |
| A8 | 2.12E-08 | 3.20E-08 | -4.31E-06 | -2.15E-06 |
| A10 | -4.16E-10 | -5.91E-10 | 3.96E-07 | 1.53E-07 |
| A12 | 4.28E-12 | 5.51E-12 | -7.78E-09 | -3.33E-09 |
| A14 | 0.00E+00 | 0.00E+00 | 0.00E+00 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

Based on the parameter information provided above, the following data can be derived:

| f7/f | -4.621 | (CT4-CT5)*($\alpha$4-$\alpha$5) | -6.376 |
|---|---|---|---|
| f37/f | 1.034 | 2*ImgH/EPD | 1.003 |
| f45/f | -2.743 | (D12+CT2)/(CT3+D34) | 0.692 |
| f3/CT3 | 9.247 | CT6/CT7 | 3.269 |

In addition, it can be seen from the aberration diagram in FIG. 8 that the longitudinal spherical aberration, field curvature and distortion of the optical system 100 are well controlled, so that the optical system 100 of this embodiment has good imaging quality.

Fifth embodiment

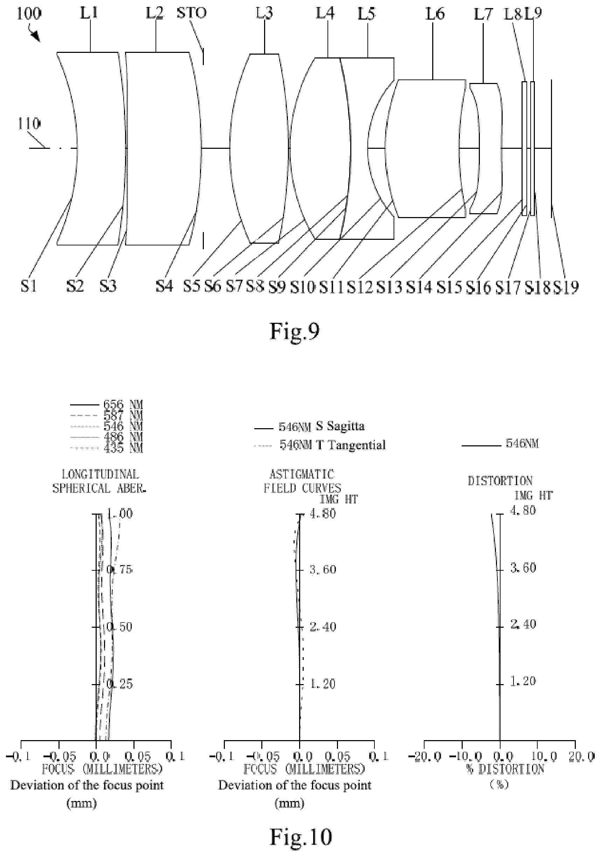

Please refer to FIG. 9 and FIG. 10, FIG. 9 is a schematic structural diagram of the optical system 100 of the fifth embodiment, the optical system 100 sequentially includes a first lens L1 having negative refractive power, a second lens L2 having positive refractive power, an aperture STO, a third lens L3 having positive refractive power, a fourth lens L4 having positive refractive power, a fifth lens L5 having negative refractive power, a sixth lens L6 having positive refractive power, and a seventh lens L7 having negative refractive power along an optical axis 110 from an object side to an imaging side. The fourth lens L4 and the fifth lens L5 are cemented, and f45=-40.822mm. FIG. 10 shows the graphs of longitudinal spherical aberration, astigmatism and distortion of the optical system 100 in the second embodiment from left to right, in which the reference wavelength of the astigmatism diagram and the distortion diagram is 546nm.

An object side surface S1 of the first lens L1 is concave near the optical axis 110, and an imaging side surface S2 is convex near the optical axis 110.

An object side surface S3 of the second lens L2 is convex near the optical axis 110, and an imaging side surface S4 is convex near the optical axis 110.

An object side surface S5 of the third lens L3 is convex near the optical axis 110, and an imaging side surface S6 is convex near the optical axis 110.

An object side surface S7 of the fourth lens L4 is convex near the optical axis 110, and an imaging side surface S8 is convex near the optical axis 110.

An object side surface S9 of the fifth lens L5 is concave near the optical axis 110, and an imaging side surface S10 is concave near the optical axis 110.

An object side surface S11 of the sixth lens L6 is convex near the optical axis 110, and an imaging side surface S12 is concave near the optical axis 110.

An object side surface S13 of the seventh lens L7 is concave near the optical axis 110, and an imaging side surface S14 is concave near the optical axis 110.

The object side surfaces and the imaging side surfaces of the second lens L2 and the seventh lens L7 are both aspherical surfaces, the object side surfaces and the imaging side surfaces of the first lens L1, the third lens L3, the fourth lens L4, the fifth lens L5, and the sixth lens L6 are both spherical surfaces.

The first lens L1, the second lens L2, the third lens L3, the fourth lens L4, the fifth lens L5, the sixth lens L6 and the seventh lens L7 are all made of glass.

In addition, various parameters of the optical system 100 are given in Table 9, and the definitions of each parameter can be derived from the first embodiment and will not be described again here.

The reference wavelength for the focal length of each lens is 546nm, and the reference wavelength for the refractive index and Abbe number is 587.56nm (d line).

Table 9

| Fifth embodiment | | | | | | | | |
|---|---|---|---|---|---|---|---|---|
| f=15.39mm FNO=1.6, FOV=35.1° | | | | | | | | |
| Surface number | Surface name | Surface type | Y radius (mm) | Thickness (mm) | Material | Refractive index | Abbe number | Focal length (mm) |
|  | Object side | sphere | infinity | infinity |  |  |  |  |
| S1 | First lens | sphere | -15.827 | 3.416 | glass | 1.804 | 46.568 | -35.518 |
| S2 |  | sphere | -42.771 | 0.100 |  |  |  |  |
| S3 | Second lens | asphere | 249.041 | 5.233 | glass | 1.694 | 53.151 | 37.912 |
| S4 |  | asphere | -29.304 | *0.150* |  |  |  |  |
| STO | Aperture | sphere | infinity | 1.863 |  |  |  |  |
| S5 | Third lens | sphere | 15.858 | 4.107 | glass | 1.497 | 81.595 | 21.928 |
| S6 |  | sphere | -32.140 | 0.111 |  |  |  |  |
| S7 | Fourth lens | sphere | 12.039 | 4.311 | glass | 1.620 | 60.374 | 13.890 |
| S9 | Fifth lens | sphere | -26.523 | 1.200 | glass | 1.689 | 31.161 | -8.518 |
| S10 |  | sphere | 7.154 | 1.233 |  |  |  |  |

(continued)

| Fifth embodiment | | | | | | | | |
|---|---|---|---|---|---|---|---|---|
| f=15.39mm FNO=1.6, FOV=35.1° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S11 | Sixth lens | sphere | 12.975 | 5.191 | glass | 1.773 | 49.614 | 35.132 |
| S12 | | sphere | 20.426 | 1.428 | | | | |
| S13 | Seventh lens | asphere | -72.083 | 1.573 | glass | 1.621 | 63.876 | -41.825 |
| S14 | | asphere | 41.171 | 1.452 | | | | |
| S15 | Infrared filter | sphere | infinity | 0.300 | glass | 1.517 | 64.212 | |
| S16 | | sphere | infinity | 0.300 | | | | |
| S17 | Protective glass | sphere | infinity | 0.300 | glass | 1.517 | 64.212 | |
| S18 | | sphere | infinity | *1.150* | | | | |
| S19 | Imaging surface | sphere | infinity | 0.000 | | | | |

Furthermore, the aspherical coefficients of the imaging side surface and the object side surface of each lens of the optical system 100 are given in Table 10, and the definitions of each parameter can be derived from the first embodiment and will not be described again here.

Table 10

| Surface number | S3 | S4 | S13 | S14 |
|---|---|---|---|---|
| K | 0.00E+00 | 0.00E+00 | 0.00E+00 | 0.00E+00 |
| A4 | -1.98E-05 | -5.61E-05 | -3.32E-03 | -3.43E-03 |
| A6 | 1.91E-07 | -2.00E-07 | 7.81E-05 | 7.81E-05 |
| A8 | -2.30E-08 | 4.14E-09 | -5.48E-06 | -1.95E-06 |
| A10 | 9.01E-10 | -2.72E-11 | 8.13E-08 | 1.82E-08 |
| A12 | -9.08E-12 | 4.90E-14 | -4.54E-10 | 5.32E-10 |
| A14 | 0.00E+00 | 0.00E+00 | 0.00E+00 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

Based on the parameter information provided above, the following data can be derived:

| f7/f | -2.718 | $(CT4-CT5)*(\alpha 4-\alpha 5)$ | -9.023 |
|---|---|---|---|
| f37/f | 1.251 | 2*ImgH/EPD | 0.998 |
| f45/f | -2.652 | (D12+CT2)/(CT3+D34) | 1.264 |
| f3/CT3 | 5.339 | CT6/CT7 | 3.300 |

In addition, it can be seen from the aberration diagram in FIG. 10 that the longitudinal spherical aberration, field curvature and distortion of the optical system 100 are well controlled, so that the optical system 100 of this embodiment has good imaging quality.

Sixth embodiment

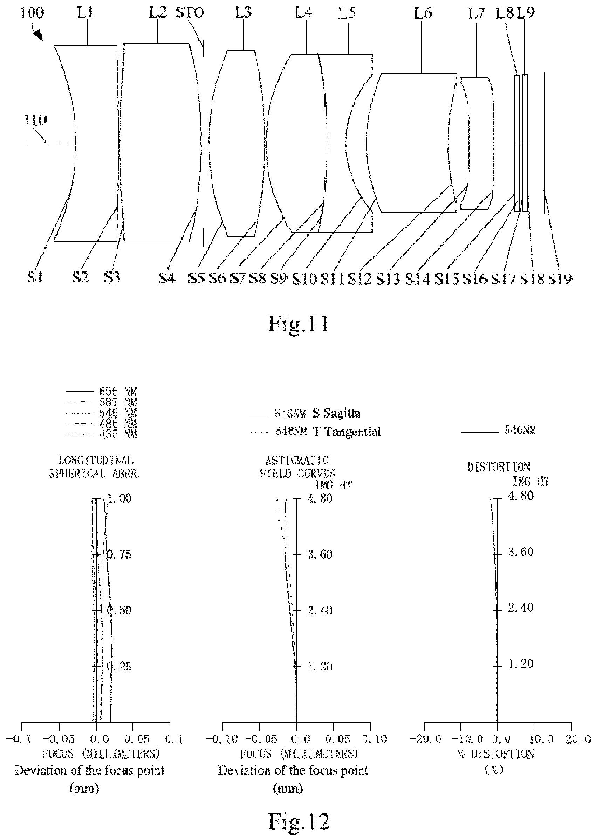

Please refer to FIG. 11 and FIG. 12, FIG. 11 is a schematic structural diagram of the optical system 100 of the sixth embodiment, the optical system 100 sequentially includes a first lens L1 having negative refractive power, a second lens L2 having positive refractive power, an aperture STO, a third lens L3 having positive refractive power, a fourth lens L4 having positive refractive power, a fifth lens L5 having negative refractive power, a sixth lens L6 having positive refractive power, and a seventh lens L7 having negative refractive power along an optical axis 110 from an object side to an imaging side. The fourth lens L4 and the fifth lens L5 are cemented, and f45=-41.378mm. FIG. 12 shows the graphs of longitudinal spherical aberration, astigmatism and distortion of the optical system 100 in the second embodiment from left to right, in which the reference wavelength of the astigmatism diagram and the distortion diagram is 546nm.

An object side surface S1 of the first lens L1 is concave near the optical axis 110, and an imaging side surface S2 is convex near the optical axis 110.

An object side surface S3 of the second lens L2 is convex near the optical axis 110, and an imaging side surface S4 is convex near the optical axis 110.

An object side surface S5 of the third lens L3 is convex near the optical axis 110, and an imaging side surface S6 is convex near the optical axis 110.

An object side surface S7 of the fourth lens L4 is convex near the optical axis 110, and an imaging side surface S8 is convex near the optical axis 110.

An object side surface S9 of the fifth lens L5 is concave near the optical axis 110, and an imaging side surface S10 is concave near the optical axis 110.

An object side surface S11 of the sixth lens L6 is convex near the optical axis 110, and an imaging side surface S12 is concave near the optical axis 110.

An object side surface S13 of the seventh lens L7 is concave near the optical axis 110, and an imaging side surface S14 is concave near the optical axis 110.

The object side surfaces and the imaging side surfaces of the second lens L2 and the seventh lens L7 are both aspherical surfaces, the object side surfaces and the imaging side surfaces of the first lens L1, the third lens L3, the fourth lens L4, the fifth lens L5, and the sixth lens L6 are both spherical surfaces.

The first lens L1, the second lens L2, the third lens L3, the fourth lens L4, the fifth lens L5, the sixth lens L6 and the seventh lens L7 are all made of glass.

In addition, various parameters of the optical system 100 are given in Table 11, and the definitions of each parameter can be derived from the first embodiment and will not be described again here.

The reference wavelength for the focal length of each lens is 546nm, and the reference wavelength for the refractive index and Abbe number is 587.56nm (d line).

Table 11

| Sixth embodiment | | | | | | | | |
|---|---|---|---|---|---|---|---|---|
| f=15.39mm, FNO=1.6, FOV=35° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S1 | First lens | sphere | -15.634 | 2.987 | glass | 1.804 | 46.568 | -22.696 |
| S2 | | sphere | -184.458 | 0.100 | | | | |
| S3 | Second lens | asphere | 51.330 | 5.650 | glass | 1.694 | 53.151 | 27.934 |
| S4 | | asphere | -29.947 | 0.184 | | | | |
| STO | Aperture | sphere | infinity | 0.335 | | | | |
| S5 | Third lens | sphere | 16.166 | 3.864 | glass | 1.497 | 81.595 | 22.067 |
| S6 | | sphere | -31.678 | 0.100 | | | | |
| S7 | Fourth lens | sphere | 11.507 | 4.245 | glass | 1.620 | 60.374 | 14.024 |

(continued)

| Sixth embodiment | | | | | | | | |
|---|---|---|---|---|---|---|---|---|
| f=15.39mm, FNO=1.6, FOV=35° | | | | | | | | |
| Surface number | Surface name | Surface type | Y radius (mm) | Thickness (mm) | Material | Refractive index | Abbe number | Focal length (mm) |
| | Object side | sphere | infinity | infinity | | | | |
| S9 | Fifth lens | sphere | -31.133 | 1.302 | glass | 1.689 | 31.161 | -8.516 |
| S10 | | sphere | 6.872 | 1.466 | | | | |
| S11 | Sixth lens | sphere | 11.493 | 5.620 | glass | 1.773 | 49.614 | 34.562 |
| S12 | | sphere | 15.809 | 1.432 | | | | |
| S13 | Seventh lens | asphere | -215.597 | 1.735 | glass | 1.621 | 63.876 | -70.754 |
| S14 | | asphere | 55.600 | 1.450 | | | | |
| S15 | Infrared filter | sphere | infinity | 0.300 | glass | 1.517 | 64.212 | |
| S16 | | sphere | infinity | 0.300 | | | | |
| S17 | Protective glass | sphere | infinity | 0.300 | glass | 1.517 | 64.212 | |
| S18 | | sphere | infinity | *1.150* | | | | |
| S19 | Imaging surface | sphere | infinity | 0.000 | | | | |

Furthermore, the aspherical coefficients of the imaging side surface and the object side surface of each lens of the optical system 100 are given in Table 12, and the definitions of each parameter can be derived from the first embodiment and will not be described again here.

Table 12

| Surface number | S3 | S4 | S13 | S14 |
|---|---|---|---|---|
| K | 0.00E+00 | 0.00E+00 | 0.00E+00 | 0.00E+00 |
| A4 | -3.66E-06 | -2.93E-05 | -2.01E-03 | -7.95E-03 |
| A6 | -1.69E-07 | -2.45E-07 | -9.36E-06 | -6.97E-06 |
| A8 | -3.08E-09 | 3.97E-09 | -1.29E-07 | 1.31E-07 |
| A10 | 1.50E-10 | -2.33E-11 | -1.01E-08 | -2.27E-08 |
| A12 | -1.88E-12 | 3.33E-14 | 2.01E-10 | 6.69E-10 |
| A14 | 0.00E+00 | 0.00E+00 | 0.00E+00 | 0.00E+00 |
| A16 | 0.00E+00 | 0.00E+00 | 0.00E+00 | 0.00E+00 |
| A18 | 0.00E+00 | 0.00E+00 | 0.00E+00 | 0.00E+00 |
| A20 | 0.00E+00 | 0.00E+00 | 0.00E+00 | 0.00E+00 |

Based on the parameter information provided above, the following data can be derived:

| f7/f | -4.597 | (CT4-CT5)*($\alpha$4-$\alpha$5) | -8.536 |
|---|---|---|---|
| f37/f | 1.139 | 2*ImgH/EPD | 0.998 |
| f45/f | -2.689 | (D12+CT2)/(CT3+D34) | 1.450 |
| f3/CT3 | 5.710 | CT6/CT7 | 3.240 |

In addition, it can be seen from the aberration diagram in FIG. 12 that the longitudinal spherical aberration, field curvature and distortion of the optical system 100 are well controlled, so that the optical system 100 of this embodiment has good imaging quality.

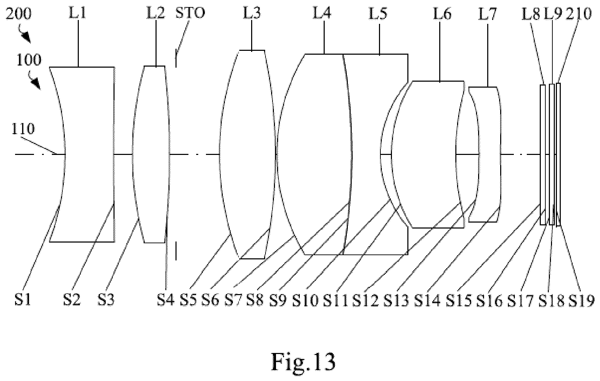

Referring to FIG. 13, in some embodiments, the optical system 100 may be assembled with the photosensitive element 210 to form an image module 200. At this time, the photosensitive surface of the photosensitive element 210 may be regarded as the imaging surface S19 of the optical system 100. The image module 200 may also be provided with an infrared filter L8 and a protective glass L9, the infrared filter L8 and the protective glass L9 are arranged in sequence between the imaging side surface S14 of the seventh lens L7 and the imaging surface S19. Specifically, the photosensitive element 210 may be a charge coupled device (CCD) or a complementary metal-oxide semiconductor sensor (CMOS Sensor). Using the above-mentioned optical system 100 in the image module 200 can achieve both telephoto characteristics and high imaging quality.

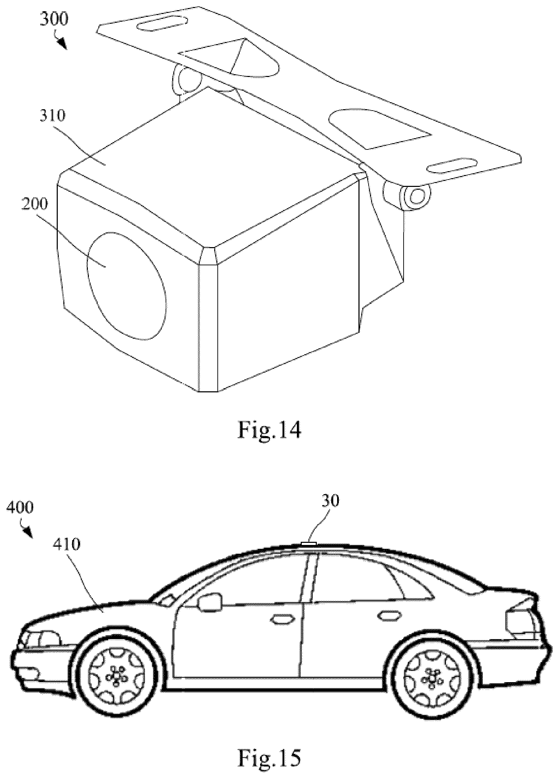

Referring to FIG. 13 and FIG. 14, in some embodiments, the image module 200 may be applied in an electronic device 300, the electronic device includes a housing 310, the image module 200 is arranged in the housing 310. Specifically, the electronic device 300 may be, but is not limited to, a mobile phone, a video phone, a smartphone, an electronic book reader, a vehicle-mounted camera device such as a driving recorder, or a wearable device such as a smart watch. When the electronic device 300 is a smartphone, the housing 310 may be a middle frame of the electronic device 300. Using the above-mentioned image module 200 in the electronic device 300 can achieve both telephoto characteristics and high imaging quality.

Referring to FIG. 15, some embodiments of the present application also provide a vehicle 400. The vehicle 400 includes a mounting part 410 and the above-mentioned electronic device 300, the electronic device 300 is provided on the mounting part 410. The vehicle may be a land vehicle such as a car or a train, a flying vehicle such as a drone, or other common vehicles that can carry people or objects. When the vehicle 4000 is a car, the mounting part 410 for setting the electronic device 300 may be an air intake grille, a rear trunk, a rearview mirror, etc. Further, in some embodiments, the electronic device 300 is a forward-looking camera in the vehicle 400. By using the above-mentioned electronic device 300, the vehicle 400 can achieve both telephoto characteristics and high imaging quality, thereby improving the driving safety of the vehicle 400.

In the description of the present invention, it should be understood that the orientation or positional relationship indicated by the terms the terms "center", "longitudinal", "transverse", "length", "width", "thickness", "upper", "lower", "front", " "back", "left", "right", "vertical", "Horizontal", "top", "bottom", "Inside", "outside", "clockwise", "counterclockwise", "axis", etc. is based on the orientation or positional relationship shown in the drawings, and is only used for the convenience of describing the present invention and simplifying the description, rather than indicating or implying that the device or element referred to must have a specific orientation, be constructed and operate in a specific orientation, and therefore it should not be construed as a limitation of the present invention.

In addition, the terms "first" and "second" are used for descriptive purposes only and cannot be understood as indicating or implying relative importance or implicitly indicating the quantity of indicated technical features. Therefore, features defined as "first" and "second" may explicitly or implicitly include at least one of these features. In the description of the present invention, "plurality" means at least two, such as two, three, etc., unless otherwise expressly and specifically limited.

In the present invention, unless otherwise clearly stated and limited, the terms "installation", "connection", "connected", "fixing" and other terms should be understood in a broad sense, for example, it can be a fixed connection or a detachable connection, or integrated; it can be a mechanical connection or an electrical connection; it can be a direct connection or an indirect connection through an intermediate medium; it can be an internal connection between two elements or an interactive relationship between two elements, unless otherwise specified restrictions. For those of ordinary skill in the art, the specific meanings of the above terms in the present invention can be understood according to specific circumstances.

In the present invention, unless otherwise expressly stated and limited, a first feature being "on" or "below" a second feature may mean that the first and second features are in direct contact, or the first and second features are in indirect contact through an intermediate medium. Moreover, the first feature being "on", "above", "over" the second feature may mean that the first feature is directly above or diagonally above the second feature, or simply means that the first feature is higher in level than the second feature. The first feature being "down", "below", "under" the second feature may mean that the first feature is directly below or diagonally below the second feature, or simply means that the first feature has a smaller horizontal height than the second feature.

In the description of this specification, reference to the terms "one embodiment," "some embodiments," "an example," "specific examples," or "some examples" or the like means that specific features, structures, materials or characteristics described in connection with the embodiment or example is included in at least one embodiment or example of the present invention. In this specification, the schematic expressions of the above terms are not necessarily directed to the same embodiment or example. Furthermore, the specific features, structures, materials or characteristics described may be combined in any suitable manner in any one or more embodiments or examples. Moreover, those skilled in the art may combine and link different embodiments or examples and features of different embodiments or examples described in this specification unless they are inconsistent with each other.

The technical features of the above-described embodiments may be combined in any way, to simplify the description, not all possible combinations of the technical features in the above-described embodiments are described, however, as long as there is no contradiction in the combination of these technical features, it should be considered to be within the scope of this specification.

The above-mentioned embodiments only express several implementation modes of the present invention, and their descriptions are relatively specific and detailed, but they should not be construed as limiting the scope of the invention. It should be noted that, for those of ordinary skill in the art, several modifications and improvements may be made without departing from the scope of the present invention as defined by the appended claims. Therefore, the scope of protection of the patent of the present invention should be determined by the appended claims.

**Claims**

1. An optical system (100), from an object side to an imaging side along an optical axis (110), sequentially comprising:

    a first lens (L1) having negative refractive power, an object side surface (S1) of the first lens (L1) being concave near the optical axis (110);
    a second lens (L2) having positive refractive power, an object side surface (S3) of the second lens (L2) being convex near the optical axis (110);
    a third lens (L3) having positive refractive power, an object side surface (S5) of the third lens (L3) being convex near the optical axis (110), an imaging side surface (S6) of the third lens (L3) being convex near the optical axis (110);
    a fourth lens (L4) having positive refractive power;
    a fifth lens (L5) having negative refractive power, an object side surface (S9) of the fifth lens (L5) being concave near the optical axis (110), an imaging side surface (S10) of the fifth lens (L5) being concave near the optical axis (110);
    a sixth lens (L6) having positive refractive power;
    a seventh lens (L7) having negative refractive power, an object side surface (S13) of the seventh lens (L7) being concave near the optical axis (110), an imaging side surface (S14) of the seventh lens (L7) being concave near the optical axis (110); and

    wherein the optical system comprises a total of seven lenses consisting of the first lens (L1), the second lens (L2), the third lens (L3), the fourth lens (L4), the fifth lens (L5), the sixth lens (L6), and the seventh lens (L7), **characterized in that**
    the optical system (100) satisfying following conditional expressions:

$$-5 \leq f7/f \leq -2.5;$$

    wherein, f7 is an effective focal length of the seventh lens (L7), f is an effective focal length of the optical system (100)
    and the optical system (100) further satisfies following relational expression:

$$3 \leq CT6/CT7 \leq 5;$$

    wherein, CT6 is a thickness of the sixth lens (L6) at the optical axis (110), and CT7 is a thickness of the seventh lens (L7) at the optical axis (110).

2. The optical system (100) according to claim 1, **characterized in that**, satisfying following conditional expression:

$$1 \leq f37/f \leq 1.5;$$

    wherein, f37 is a combined focal length of the third lens (L3), the fourth lens (L4), the fifth lens (L5), the sixth lens (L6) and the seventh lens (L7).

3. The optical system (100) according to claim 2, **characterized in that**, satisfying following conditional expression:

$$-4 \leq f45/f \leq -2;$$

wherein, f45 is a combined focal length of the fourth lens (L4) and the fifth lens (L5).

4. The optical system (100) according to claim 3, **characterized in that**, satisfying following conditional expression:

$$f45 \leq -30.$$

5. The optical system (100) according to claim 1, **characterized in that**, satisfying following conditional expression:

$$5 \leq f3/CT3 \leq 9.5;$$

wherein, f3 is an effective focal length of the third lens (L3), CT3 is a thickness of the third lens (L3) at the optical axis (110).

6. The optical system (100) according to claim 1, **characterized in that**, the fourth lens (L4) and the fifth lens (L5) are cemented, the optical system (100) satisfies following conditional expression:

$$-9.5mm*10^{-6}/°C \leq (CT4-CT5)*(\alpha4-\alpha5) \leq -6mm*10^{-6}/°C;$$

wherein, CT4 is a thickness of the fourth lens (L4) at the optical axis (110), CT5 is a thickness of the fifth lens (L5) at the optical axis (110), $\alpha4$ is a thermal expansion coefficient of the fourth lens (L4) under conditions of -30°C-70°C, $\alpha5$ is a thermal expansion coefficient of penta-lens under conditions of -30°C-70°C.

7. The optical system (100) according to claim 1, **characterized in that**, satisfying following conditional expression: $0.9 \leq 2*ImgH/EPD \leq 1.1$; wherein, ImgH is half of the image height corresponding to the maximum field of view of the optical system (100), EPD is an entrance pupil diameter of the optical system (100).

8. The optical system (100) according to claim 1, **characterized in that**, satisfying following conditional expression:

$$0.6 \leq (D12+CT2)/(CT3+D34) \leq 1.5;$$

wherein, D12 is a distance from the imaging side surface of the first lens (L1) to the object side surface (S3) of the second lens (L2) on the optical axis (110), CT2 is a thickness of the second lens (L2) at the optical axis (110), CT3 is a thickness of the third lens (L3) at the optical axis (110), D34 is a imaging side surface of the third lens (L3) to the object side surface of the fourth lens (L4) on the optical axis (110).

9. The optical system (100) according to claim 1, **characterized in that**, satisfying following conditional expression:

$$f \geq 15.28mm.$$

10. The optical system (100) according to any one of claims 1 to 9, **characterized in that**, further comprising an aperture (STO), the aperture (STO) being disposed between the second lens (L2) and the third lens (L3).

11. The optical system (100) according to any one of claims 1 to 9, **characterized in that**, further comprising an infrared filter (L8), a protective glass (L9), the infrared filter (L8) being disposed on the imaging side of the seventh lens (L7), the protective glass (L9) being disposed on the imaging side of the seventh lens (L7), wherein the object side surface (S3) and the imaging side surface (S4) of the second lens (L2) and the object side surface (S13) and the imaging side surface (S14) of the seventh lens (L7) are all aspherical surfaces, the object side surfaces and the imaging side surfaces of the first lens (L1), the third lens (L3), the fourth lens (L4), the fifth lens (L5), and the sixth lens (L6) are all spherical surfaces, materials of all of the first lens (L1), the second lens (L2), the third lens (L3), the fourth lens (L4), the fifth lens (L5), the sixth lens (L6), and the seventh lens (L7) in the optical system (100) are glass.

12. An image module (200), comprising a photosensitive element (210) and the optical system (100) of any one of claims 1 to 9, the photosensitive element (210) being disposed on the image side of the optical system (100).

13. An electronic device (300), comprising a housing (310) and the image module (200) of claim 12, the image module (200) being arranged in the housing (310).

14. A vehicle (400), comprising a mounting part (410) and the electronic device (300) of claim 13, the electronic device (300) is disposed on the mounting part (410).

**Patentansprüche**

1. Ein optisches System (100), das von einer Objektseite zu einer Bildseite entlang einer optischen Achse (110) sequenziell umfasst:

eine erste Linse (L1) mit negativer Brechkraft, wobei eine objektseitige Oberfläche (S1) der ersten Linse (L1) in der Nähe der optischen Achse (110) konkav ist;
eine zweite Linse (L2) mit positiver Brechkraft, wobei eine objektseitige Oberfläche (S3) der zweiten Linse (L2) in der Nähe der optischen Achse (110) konvex ist;
eine dritte Linse (L3) mit positiver Brechkraft, wobei eine objektseitige Oberfläche (S5) der dritten Linse (L3) in der Nähe der optischen Achse (110) konvex ist und eine bildseitige Oberfläche (S6) der dritten Linse (L3) in der Nähe der optischen Achse (110) konvex ist;
eine vierte Linse (L4) mit positiver Brechkraft;
eine fünfte Linse (L5) mit negativer Brechkraft, wobei eine objektseitige Oberfläche (S9) der fünften Linse (L5) in der Nähe der optischen Achse (110) konkav ist und eine bildseitige Oberfläche (S10) der fünften Linse (L5) in der Nähe der optischen Achse (110) konkav ist;
eine sechste Linse (L6) mit positiver Brechkraft;
eine siebte Linse (L7) mit negativer Brechkraft, wobei eine objektseitige Oberfläche (S13) der siebten Linse (L7) in der Nähe der optischen Achse (110) konkav ist und eine bildseitige Oberfläche (S14) der siebten Linse (L7) in der Nähe der optischen Achse (110) konkav ist; und
wobei das optische System insgesamt sieben Linsen umfasst, bestehend aus der ersten Linse (L1), der zweiten Linse (L2), der dritten Linse (L3), der vierten Linse (L4), der fünften Linse (L5), der sechsten Linse (L6) und der siebten Linse (L7),

**dadurch gekennzeichnet, dass**

das optische System (100) die folgenden bedingten Ausdrücke erfüllt:

$$-5 \leq f7/f \leq -2.5;$$

wobei f7 eine effektive Brennweite der siebten Linse (L7) ist, f eine effektive Brennweite des optischen Systems (100) ist und das optische System (100) ferner den folgenden relationalen Ausdruck erfüllt:

$$3 \leq CT6/CT7 \leq 5;$$

wobei CT6 eine Dicke der sechsten Linse (L6) an der optischen Achse (110) ist und CT7 eine Dicke der siebten Linse (L7) an der optischen Achse (110) ist.

2. Das optische System (100) nach Anspruch 1, **dadurch gekennzeichnet, dass** es den folgenden bedingten Ausdruck erfüllt:

$$1 \leq f37/f \leq 1.5;$$

wobei f37 eine kombinierte Brennweite der dritten Linse (L3), der vierten Linse (L4), der fünften Linse (L5), der sechsten Linse (L6) und der siebten Linse (L7) ist.

3. Das optische System (100) nach Anspruch 2, **dadurch gekennzeichnet, dass** es den folgenden bedingten Ausdruck erfüllt:

$$-4 \leq f45/f \leq -2;$$

wobei f45 eine kombinierte Brennweite der vierten Linse (L4) und der fünften Linse (L5) ist.

4. Das optische System (100) nach Anspruch 3, **dadurch gekennzeichnet, dass** es den folgenden bedingten Ausdruck erfüllt:

$$f45 \leq -30.$$

5. Das optische System (100) nach Anspruch 1, **dadurch gekennzeichnet, dass** es den folgenden bedingten Ausdruck erfüllt:

$$5 \leq f3/CT3 \leq 9.5;$$

wobei f3 eine effektive Brennweite der dritten Linse (L3) ist und CT3 eine Dicke der dritten Linse (L3) an der optischen Achse (110) ist.

6. Das optische System (100) nach Anspruch 1, **dadurch gekennzeichnet, dass** die vierte Linse (L4) und die fünfte Linse (L5) verkittet sind, wobei das optische System (100) den folgenden bedingten Ausdruck erfüllt:

$$-9.5mm*10^{-6}/°C \leq (CT4-CT5)*(\alpha 4-\alpha 5) \leq -6mm*10^{-6}/°C;$$

wobei CT4 eine Dicke der vierten Linse (L4) an der optischen Achse (110) ist, CT5 eine Dicke der fünften Linse (L5) an der optischen Achse (110) ist, $\alpha 4$ ein Wärmeausdehnungskoeffizient der vierten Linse (L4) unter Bedingungen von -30°C bis -70°C ist und $\alpha 5$ ein Wärmeausdehnungskoeffizient der fünften Linse (L5) unter Bedingungen von -30°C bis -70°C ist.

7. Das optische System (100) nach Anspruch 1, **dadurch gekennzeichnet, dass** es den folgenden bedingten Ausdruck erfüllt:

$$0.9 \leq 2*ImgH/EPD \leq 1.1;$$

wobei ImgH die Hälfte der Bildhöhe ist, die dem maximalen Sichtfeld des optischen Systems (100) entspricht, und EPD ein Eintrittspupillendurchmesser des optischen Systems (100) ist.

8. Das optische System (100) nach Anspruch 1, **dadurch gekennzeichnet, dass** es den folgenden bedingten Ausdruck erfüllt:

$$0.6 \leq (D12+CT2)/(CT3+D34) \leq 1.5;$$

wobei D12 ein Abstand von der bildseitigen Oberfläche der ersten Linse (L1) zu der objektseitigen Oberfläche (S3) der zweiten Linse (L2) auf der optischen Achse (110) ist, CT2 eine Dicke der zweiten Linse (L2) an der optischen Achse (110) ist, CT3 eine Dicke der dritten Linse (L3) an der optischen Achse (110) ist, und D34 ein Abstand von der bildseitigen Oberfläche der dritten Linse (L3) zu der objektseitigen Oberfläche der vierten Linse (L4) auf der optischen Achse (110) ist.

9. Das optische System (100) nach Anspruch 1, **dadurch gekennzeichnet, dass** es den folgenden bedingten Ausdruck erfüllt:

$$f \geq 15.28mm.$$

10. Das optische System (100) nach einem der Ansprüche 1 bis 9, **dadurch gekennzeichnet, dass** es ferner eine Blende (STO) umfasst, wobei die Blende (STO) zwischen der zweiten Linse (L2) und der dritten Linse (L3) angeordnet ist.

11. Das optische System (100) nach einem der Ansprüche 1 bis 9, **dadurch gekennzeichnet, dass** es ferner einen Infrarotfilter (L8) und ein Schutzglas (L9) umfasst, wobei der Infrarotfilter (L8) auf der Bildseite der siebten Linse (L7) angeordnet ist und das Schutzglas (L9) auf der Bildseite der siebten Linse (L7) angeordnet ist, wobei die objektseitige Oberfläche (S3) und die bildseitige Oberfläche (S4) der zweiten Linse (L2) sowie die objektseitige Oberfläche (S13) und die bildseitige Oberfläche (S14) der siebten Linse (L7) allesamt asphärische Oberflächen sind, die objektseitigen Oberflächen und die bildseitigen Oberflächen der ersten Linse (L1), der dritten Linse (L3), der vierten Linse (L4), der fünften Linse (L5) und der sechsten Linse (L6) allesamt sphärische Oberflächen sind, und die Materialien der gesamten ersten Linse (L1), der zweiten Linse (L2), der dritten Linse (L3), der vierten Linse (L4), der fünften Linse (L5), der sechsten Linse (L6) und der siebten Linse (L7) in dem optischen System (100) aus Glas bestehen.

12. Ein Kameramodul (200), das ein lichtempfindliches Element (210) und das optische System (100) nach einem der Ansprüche 1 bis 9 umfasst, wobei das lichtempfindliche Element (210) auf der Bildseite des optischen Systems (100) angeordnet ist.

13. Eine elektronische Vorrichtung (300), die ein Gehäuse (310) und das Kameramodul (200) nach Anspruch 12 umfasst, wobei das Kameramodul (200) in dem Gehäuse (310) angeordnet ist.

14. Ein Träger (400), der ein Befestigungsteil (410) und die elektronische Vorrichtung (300) nach Anspruch 13 umfasst, wobei die elektronische Vorrichtung (300) an dem Befestigungsteil (410) angeordnet ist.

**Revendications**

1. Un système optique (100), allant d'un côté objet vers un côté image le long d'un axe optique (110), comprenant séquentiellement:

une première lentille (L1) ayant une puissance de réfraction négative, une surface côté objet (S1) de la première lentille (L1) étant concave près de l'axe optique (110);
une deuxième lentille (L2) ayant une puissance de réfraction positive, une surface côté objet (S3) de la deuxième lentille (L2) étant convexe près de l'axe optique (110);
une troisième lentille (L3) ayant une puissance de réfraction positive, une surface côté objet (S5) de la troisième lentille (L3) étant convexe près de l'axe optique (110), une surface côté image (S6) de la troisième lentille (L3) étant convexe près de l'axe optique (110);
une quatrième lentille (L4) ayant une puissance de réfraction positive;
une cinquième lentille (L5) ayant une puissance de réfraction négative, une surface côté objet (S9) de la cinquième lentille (L5) étant concave près de l'axe optique (110), une surface côté image (S10) de la cinquième lentille (L5) étant concave près de l'axe optique (110);
une sixième lentille (L6) ayant une puissance de réfraction positive;
une septième lentille (L7) ayant une puissance de réfraction négative, une surface côté objet (S13) de la septième lentille (L7) étant concave près de l'axe optique (110), une surface côté image (S14) de la septième lentille (L7) étant concave près de l'axe optique (110); et
dans lequel le système optique comprend un total de sept lentilles constituées de la première lentille (L1), de la deuxième lentille (L2), de la troisième lentille (L3), de la quatrième lentille (L4), de la cinquième lentille (L5), de la sixième lentille (L6) et de la septième lentille (L7),

**caractérisé en ce que**

le système optique (100) satisfait aux expressions conditionnelles suivantes:

$$-5 \leq f7/f \leq -2.5;$$

dans lequel, f7 est une distance focale effective de la septième lentille (L7), f est une distance focale effective du système optique (100) et le système optique (100) satisfait en outre à l'expression relationnelle suivante:

$$3 \leq CT6/CT7 \leq 5;$$

dans lequel, CT6 est une épaisseur de la sixième lentille (L6) au niveau de l'axe optique (110), et CT7 est une épaisseur de la septième lentille (L7) au niveau de l'axe optique (110).

2. Le système optique (100) selon la revendication 1, **caractérisé en ce qu'**il satisfait à l'expression conditionnelle suivante:

$$1 \leq f37/f \leq 1.5;$$

dans lequel, f37 est une distance focale combinée de la troisième lentille (L3), la quatrième lentille (L4), la cinquième lentille (L5), la sixième lentille (L6) et la septième lentille (L7).

3. Le système optique (100) selon la revendication 2, **caractérisé en ce qu'**il satisfait à l'expression conditionnelle suivante:

$$-4 \leq f45/f \leq -2;$$

dans lequel, f45 est une distance focale combinée de la quatrième lentille (L4) et de la cinquième lentille (L5).

4. Le système optique (100) selon la revendication 3, **caractérisé en ce qu'**il satisfait à l'expression conditionnelle suivante:

$$f45 \leq -30.$$

5. Le système optique (100) selon la revendication 1, **caractérisé en ce qu'**il satisfait à l'expression conditionnelle suivante:

$$5 \leq f3/CT3 \leq 9.5;$$

dans lequel, f3 est une distance focale effective de la troisième lentille (L3), CT3 est une épaisseur de la troisième lentille (L3) au niveau de l'axe optique (110).

6. Le système optique (100) selon la revendication 1, **caractérisé en ce que** la quatrième lentille (L4) et la cinquième lentille (L5) sont collées, le système optique (100) satisfaisant à l'expression conditionnelle suivante:

$$-9.5\text{mm}*10^{-6}/°C \leq (CT4-CT5)*(\alpha4-\alpha5) \leq -6\text{mm}*10^{-6}/°C;$$

dans lequel, CT4 est une épaisseur de la quatrième lentille (L4) au niveau de l'axe optique (110), CT5 est une épaisseur de la cinquième lentille (L5) au niveau de l'axe optique (110), $\alpha4$ est un coefficient de dilatation thermique de la quatrième lentille (L4) dans des conditions allant de -30°C à -70°C, $\alpha5$ est un coefficient de dilatation thermique de la cinquième lentille (L5) dans des conditions allant de -30°C à -70°C.

7. Le système optique (100) selon la revendication 1, **caractérisé en ce qu'**il satisfait à l'expression conditionnelle suivante:

$$0.9 \leq 2*ImgH/EPD \leq 1.1;$$

dans lequel, ImgH est la moitié de la hauteur d'image correspondant au champ de vision maximal du système optique (100), EPD est un diamètre de pupille d'entrée du système optique (100).

8. Le système optique (100) selon la revendication 1, **caractérisé en ce qu'**il satisfait à l'expression conditionnelle suivante:

$$0.6 \leq (D12+CT2)/(CT3+D34) \leq 1.5;$$

dans lequel, D12 est une distance de la surface côté image de la première lentille (L1) à la surface côté objet (S3) de la deuxième lentille (L2) sur l'axe optique (110), CT2 est une épaisseur de la deuxième lentille (L2) au niveau de l'axe optique (110), CT3 est une épaisseur de la troisième lentille (L3) au niveau de l'axe optique (110), D34 est une distance de la surface côté image de la troisième lentille (L3) à la surface côté objet de la quatrième lentille (L4) sur l'axe optique (110).

9. Le système optique (100) selon la revendication 1, **caractérisé en ce qu'**il satisfait à l'expression conditionnelle suivante:

$$f \geq 15.28 \text{mm}.$$

10. Le système optique (100) selon l'une quelconque des revendications 1 à 9, **caractérisé en ce qu'**il comprend en outre une ouverture (STO), l'ouverture (STO) étant disposée entre la deuxième lentille (L2) et la troisième lentille (L3).

11. Le système optique (100) selon l'une quelconque des revendications 1 à 9, **caractérisé en ce qu'**il comprend en outre un filtre infrarouge (L8), un verre de protection (L9), le filtre infrarouge (L8) étant disposé du côté image de la septième lentille (L7), le verre de protection (L9) étant disposé du côté image de la septième lentille (L7), dans lequel la surface côté objet (S3) et la surface côté image (S4) de la deuxième lentille (L2) et la surface côté objet (S13) et la surface côté image (S14) de la septième lentille (L7) sont toutes des surfaces asphériques, les surfaces côté objet et les surfaces côté image de la première lentille (L1), de la troisième lentille (L3), de la quatrième lentille (L4), de la cinquième lentille (L5) et de la sixième lentille (L6) sont toutes des surfaces sphériques, les matériaux de l'ensemble de la première lentille (L1), de la deuxième lentille (L2), de la troisième lentille (L3), de la quatrième lentille (L4), de la cinquième lentille (L5), de la sixième lentille (L6) et de la septième lentille (L7) dans le système optique (100) sont en verre.

12. Un module d'imagerie (200), comprenant un élément photosensible (210) et le système optique (100) selon l'une quelconque des revendications 1 à 9, l'élément photosensible (210) étant disposé du côté image du système optique (100).

13. Un dispositif électronique (300), comprenant un boîtier (310) et le module d'imagerie (200) de la revendication 12, le module d'imagerie (200) étant agencé dans le boîtier (310).

14. Un véhicule (400), comprenant une pièce de montage (410) et le dispositif électronique (300) de la revendication 13, le dispositif électronique (300) étant disposé sur la pièce de montage (410).

Fig.1

LONGITUDINAL
SPHERICAL ABER.

ASTIGMATIC
FIELD CURVES
IMG HT

DISTORTION
IMG HT

660 NM
610 NM
555 NM
510 NM
455 NM

555NM  S Sagitta
555NM  T Tangential

555NM

FOCUS (MILLIMETERS)
Deviation of the focus point
(mm)

FOCUS (MILLIMETERS)
Deviation of the focus point
(mm)

% DISTORTION
(%)

Fig.2

Fig.3

Fig.4

Fig.5

Fig.6

Fig.7

Fig.8

Fig.9

Fig.10

Fig.11

Fig.12

Fig.13

Fig.14

Fig.15

**REFERENCES CITED IN THE DESCRIPTION**

**Patent documents cited in the description**

- US 2021199933 A1

- US 2020150386 A1